# EUROPEAN PATENT SPECIFICATION

(11) **EP 3 315 351 B1**
(45) Date of publication and mention of the grant of the patent: **04.05.2022**
(21) Application number: 17197594.9
(22) Date of filing: 20.10.2017
(51) Int. Cl.: B60L 53/12

(54) **VEHICLE AND SUPPLY DEVICE**
FAHRZEUG UND VERSORGUNGSVORRICHTUNG
VÉHICULE ET DISPOSITIF D'ALIMENTATION

(30) Priority: 31.10.2016 JP 2016212793
(43) Date of publication of application: 02.05.2018
(73) Proprietor: TOYOTA JIDOSHA KABUSHIKI KAISHA, Toyota-shi, Aichi-ken, 471-8571 (JP)
(72) Inventor: MISAWA, Takahiro, TOYOTA-SHI, AICHI-KEN, 471-8571 (JP)
(74) Representative: Cabinet Beau de Loménie

(56) References cited:
- EP-A1- 3 082 223

## Description

### BACKGROUND OF THE INVENTION

### 1. Field of the Invention

The disclosure relates to a vehicle and a supply device.

### 2. Description of Related Art

Various supply devices that wirelessly transfer power to a vehicle equipped with a power reception apparatus or to the power reception apparatus are suggested in the related art.

For example, a power reception apparatus disclosed in Japanese Patent No. 5848359 (JP 5848359 B) includes a power reception unit, and a supply unit disclosed therein includes a power transfer unit. The power reception apparatus acquires information related to the size of the power transfer unit through a communication unit. A display unit displays a determination result for availability of wireless charging that is determined based on the information. Additionally, European Patent Application Publication No. 3082223 (EP 3082223 A1) discloses a contactless power transfer system configured to contactlessly transfer electric power from a charging station to a vehicle, and a power transmission device used therefor.

### SUMMARY OF THE INVENTION

Currently, various supply devices and power reception apparatuses are suggested. Examples of suggested supply devices include a supply device that has a transferred power adjusting function, and a supply device that does not have a transferred power adjusting function.

Examples of suggested power reception apparatuses include a power reception apparatus that has a received power adjusting function, and a power reception apparatus that does not have a received power adjusting function.

When power is transferred and received between a supply device equipped with a transferred power adjusting function and a power reception apparatus equipped with a received power adjusting function, a power control in the supply device and a power control in the power reception apparatus may interfere with each other. Consequently, various problems such as hunting of received power and an increase in charging time may arise.

When power is transferred and received between a supply device not having a transferred power adjusting function and a power reception apparatus not having a received power adjusting function, received power cannot be adjusted in accordance with variations in the charging status of a battery or the like. Consequently, problems such as deterioration of the battery may arise.

The vehicle in the related art does not consider how to control the power adjusting function of the power reception apparatus and the power adjusting function of the supply device at the time of power reception based on whether or not the power reception apparatus and the supply device have the power adjusting function. Furthermore, as in the power reception apparatus, the supply device in the related art does not consider how to control the power adjusting function of the power reception apparatus and the power adjusting function of the supply device at the time of power transfer.

The disclosure provides a power reception apparatus that can receive power by considering whether or not the power reception apparatus has a power adjusting function and whether or not a supply device has a power adjusting function at the time of power reception. In addition, the disclosure provides a supply device that can transfer power by considering whether or not a power reception apparatus has a power adjusting function and whether or not the supply device has a power adjusting function at the time of power transfer.

A first aspect of the disclosure relates to a vehicle according to claim 1.

The vehicle according to the first aspect of the disclosure enables acquisition of information indicating whether or not the supply device has a transferred power adjusting function. Thus, power can be received from the supply device by considering a power adjusting function of the power reception apparatus and a power adjusting function of the supply device. Accordingly, interference between the power adjusting function of the power reception apparatus and the power adjusting function of the supply device can be prevented. In addition, various problems due to both of the power reception apparatus and the supply device not adjusting power can be prevented.

In the vehicle according to the first aspect of the disclosure, the electric vehicle communication controller may be configured to transmit a signal requesting the supply device to transfer power by adjusting transferred power, when the electric vehicle communication controller acquires information indicating that the supply device has a function of adjusting power transferred from the primary device.

The vehicle according to the first aspect of the disclosure may further include an adjuster configured to adjust the received power. The electric vehicle communication controller may transmit a signal requesting the supply device to transfer power without adjusting transferred power, when the electric vehicle communication controller acquires information indicating that the supply device has a function of adjusting power transferred from the primary device.

The vehicle according to the first aspect of the disclosure may further include an adjuster configured to adjust the received power. In a state where the adjuster is not driven after initiation of power transfer from the supply device, the electric vehicle communication controller may acquire information indicating that the supply device has a function of adjusting power transferred from the primary device, by detecting a change in received power. The electric vehicle communication controller may acquire information indicating that the supply device does not have a transferred power adjusting function, by detecting non-changing received power.

[CANCELLED]

[CANCELLED]

[CANCELLED]

[CANCELLED]

[CANCELLED]

[CANCELLED]

[CANCELLED]

[CANCELLED]

[CANCELLED]

The vehicle according the aspects of the disclosure enables power reception considering whether or not the power reception apparatus has a power adjusting function and whether or not the supply device has a power adjusting function at the time of power reception. The supply device according to the aspects of the disclosure enables power transfer considering whether or not the power reception apparatus has a power adjusting function and whether or not the supply device has a power adjusting function at the time of power transfer.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a plan view schematically illustrating a vehicle and a WPT supply site;
FIG. 2 is a block diagram schematically illustrating the vehicle and the WPT supply site;
FIG. 3 is a side view schematically illustrating a state where the vehicle is stopped in a parking space;
FIG. 4 is a schematic diagram illustrating a secondary coil disposed in a power reception apparatus;
FIG. 5 is a schematic diagram schematically illustrating primary coils disposed in supply devices;
FIG. 6 is a schematic diagram schematically illustrating a primary coil disposed in a supply device;
FIG. 7 is a schematic diagram schematically illustrating a primary coil disposed in a supply device;
FIG. 8 is a flowchart illustrating a summary from detection of the WPT supply site by the vehicle to initiation of power transfer;
FIG. 9 is a flowchart illustrating approaching to the WPT supply site and initial compatibility check;
FIG. 10 is a flowchart illustrating positioning and pairing;
FIG. 11 is a flowchart illustrating final compatibility check;
FIG. 12 is a flowchart illustrating initial alignment check;
FIG. 13 is a flowchart illustrating power transfer initiation;
FIG. 14 is a flowchart illustrating final compatibility check in a vehicle and a WPT supply site according to a second embodiment;
FIG. 15 is a flowchart illustrating power transfer initiation in the vehicle and the WPT supply site according to the second embodiment;
FIG. 16 is a flowchart illustrating final compatibility check;
FIG. 17 is a flowchart illustrating power transfer initiation;
FIG. 18 is a flowchart illustrating final compatibility check in a vehicle and a WPT supply site according to a fourth embodiment;
FIG. 19 is a flowchart illustrating power transfer initiation in the vehicle and the WPT supply site according to the fourth embodiment;
FIG. 20 is a flowchart illustrating final compatibility check according to a fifth embodiment;
FIG. 21 is a flowchart illustrating power transfer initiation according to the fifth embodiment;
FIG. 22 is a flowchart illustrating final compatibility check according to a sixth embodiment; and
FIG. 23 is a flowchart illustrating power transfer initiation according to the sixth embodiment.

### DETAILED DESCRIPTION OF EMBODIMENTS

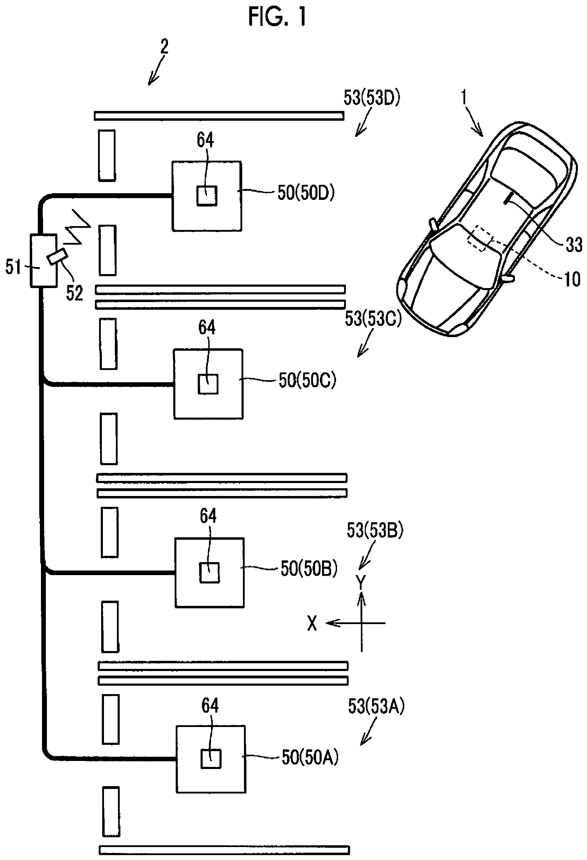

Each of first to sixth embodiments will be described by using FIG. 1 to FIG. 23. It is contemplated that the first, second, fourth, fifth, and sixth embodiments are illustrative examples serving for illustrative purposes only and do not form part of the claimed invention, which is instead embodied by the third embodiment only.

• The same configurations or substantially the same configurations will be designated by the same reference signs in FIG. 1 to FIG. 23 and may be described once. A reference sign "S(number)" in each drawing corresponds to "step (number) in the specification and is a simplified representation in the drawings.

The disclosure can be broadly divided into determination of power adjusting functions of a power reception apparatus 10 and a supply device 50 on a vehicle 1 side and determination thereof on a WPT supply site 2 side. Therefore, an example of the determination by the vehicle 1 will be described in the first to third embodiments. An example of the determination on the WPT supply site 2 will be described in the fourth and fifth embodiments. The sixth embodiment will describe an example of determination as to whether or not the supply device 50 has a power adjusting function, without using communication.

### First Embodiment

The first embodiment includes the power reception apparatus 10 that can adjust received power. The vehicle 1 adjusts power in the power reception apparatus 10 regardless of whether or not a supply device has a transferred power adjusting function. The vehicle 1 requests the WPT supply site 2 to stop adjusting power by the supply device 50.

FIG. 1 is a plan view schematically illustrating the vehicle 1 and the WPT supply site 2. As illustrated in FIG. 1, the vehicle 1 includes the power reception apparatus 10.

The WPT supply site 2 includes a plurality of the supply devices 50, a supply equipment communication controller (SECC) 51, and a wireless local network (WLN) antenna (SECC WLN antenna) 52 connected to the SECC 51. A plurality of parking spaces 53 is disposed in the WPT supply site 2. One supply device 50 is disposed in each parking space 53.

The vehicle 1 is stopped in one parking space 53, and the power reception apparatus 10 wirelessly receives power from the supply device 50 disposed in the parking space 53.

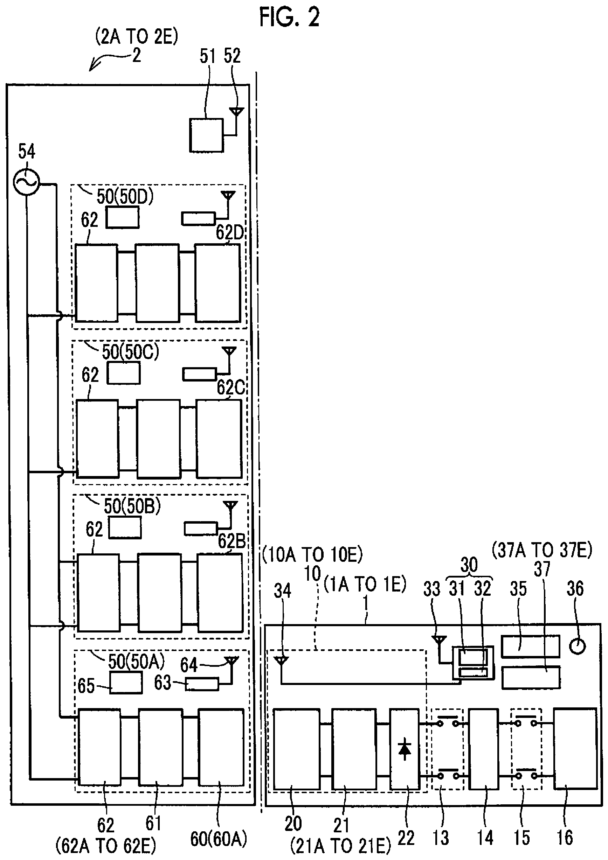

FIG. 2 is a block diagram functionally illustrating the vehicle 1 and the WPT supply site 2. As illustrated in FIG. 2, the vehicle 1 includes a charging relay 13 connected to the power reception apparatus 10, a battery 14 connected to the charging relay 13, a system main relay (SMR) 15 connected to the battery 14, and a motive power generation device 16 connected to the SMR 15. Furthermore, the vehicle 1 includes a controller 30 including an electric vehicle communication controller (EV communication controller; EVCC) 31 and a secondary device communication controller (SDCC) 32, a WLN antenna (SDCC WLN antenna) 33 connected to the controller 30, a display unit 35, a wireless charging switch 36, and a vehicle electronic control unit (ECU) 37.

The charging relay 13 is a device that electrically connects the power reception apparatus 10 to the battery 14 or disconnects the power reception apparatus 10 from the battery 14. The battery 14 is a secondary cell that can be charged with power and discharge power. The SMR 15 is a device that connects the battery 14 to the motive power generation device 16 or disconnects the battery 14 from the motive power generation device 16.

When power received by the power reception apparatus 10 is supplied to the battery 14, the charging relay 13 is switched ON, and the SMR 15 is switched OFF. The power received by the power reception apparatus 10 is supplied to the battery 14. When the vehicle 1 is traveling, the charging relay 13 is switched OFF, and the SMR 15 is switched ON. Power of the battery 14 is supplied to the motive power generation device 16, and the motive power generation device 16 generates motive power that enables the vehicle 1 to travel.

The power reception apparatus 10 includes a secondary device 20, a filter 21 connected to the secondary device 20, a rectifier 22 connected to the filter 21, and an SDCC antenna (34) connected to the controller 30.

The secondary device 20 wirelessly receives power from the supply device 50. Specifically, the secondary device 20 wirelessly receives alternating current power from a primary device 60 disposed in the supply device 50.

The filter 21 removes noise from the alternating current power received by the secondary device 20. Specifically, noise of a harmonic component or the like is removed. The rectifier 22 converts the alternating current power supplied from the filter 21 into direct current power. The direct current power output from the rectifier 22 is supplied to the battery 14 through the charging relay 13. The filter 21 includes a plurality of reactors and a capacitor.

In the first embodiment, the filter 21 includes at least a variable capacitor or a variable inductor. When the received power is adjusted, the impedance of the filter 21 is changed by adjusting the variable capacitor or the variable inductor of the filter 21. For example, when the received power is decreased, the capacitance of the variable capacitor or the inductance of the variable inductor is adjusted to increase the impedance of the filter 21. When the received power is increased, the inductance of the variable capacitor or the variable inductor is adjusted to decrease the impedance of the filter 21.

The controller 30 includes the EVCC 31 and the SDCC 32. The EVCC 31 is a system disposed in the vehicle 1 and communicates between the vehicle 1 and the SECC 51 in order to support a specific function. The SDCC 32 manages communication with a primary device communication controller (PDCC; PDCC antenna) 63 described below and is a communication management unit of the vehicle 1. The PDCC 63 and the SDCC 32 are Class 3 (communication distance: approximately 1 m) Bluetooth (registered trademark) devices.

The WLN antenna 33 is an antenna that communicates with a WLN antenna 52 of the WPT supply site 2 described below. The WLN antenna 52 enables the SECC 51 to communicate with a plurality of the EVCCs 31 at the same time.

The display unit 35 displays various types of information provided to a driver. The wireless charging switch 36 is a button that is switched ON when the driver intends to perform wireless charging.

The WPT supply site 2 includes the supply devices 50 (50A to 50D), the SECC 51, the WLN antenna 52, and a power source 54.

Each supply device 50 includes the primary device 60, a filter 61 connected to the primary device 60, a converter 62 connected to the filter 61, the PDCC 63, a PDCC antenna 64, and a camera 65.

The converter 62 is connected to the power source 54 and converts the frequency and the voltage of alternating current power supplied from the power source 54. The filter 61 removes noise in the alternating current power supplied from the converter 62. The primary device 60 receives the alternating current power from the filter 61 to form an electromagnetic field around the primary device 60. Power is wirelessly transferred from the primary device 60 to the secondary device 20 by magnetic coupling between the secondary device 20 and the primary device 60.

The PDCC antenna 64 communicates with the SDCC antenna 34. The communication distance between the PDCC antenna 64 and the SDCC antenna 34 is shorter than the communication distance between the WLN antenna 33 and the WLN antenna 52. For example, the communication distance between the PDCC antenna 64 and the SDCC antenna 34 is approximately a few tens of cm to 1 m. In FIG. 1, the SDCC antenna 34 of the vehicle 1 stopped in a parking space 53B cannot communicate with the PDCC antenna 64 disposed in the supply device 50A in a parking space 53A.

The PDCC 63 manages communication with the SDCC 32 and is a communication management unit of each supply device 50.

The converter 62 includes a converter that converts the frequency of the alternating current power supplied from the power source 54 into direct current power, and an inverter that is connected to the converter and converts the direct current power into an alternating current.

Inverters of converters 62A, 62B disposed in the supply devices 50A, 50B can perform power control such as pulse width modulation (PWM) control. Thus, the supply devices 50A, 50B can adjust transferred power in accordance with various circumstances.

The inverter of the converter 62 disposed in the supply devices 50C, 50D cannot perform power control. Thus, the supply devices 50C, 50D transfer constant power at the time of transferring power to the power reception apparatus 10.

When the vehicle 1 is stopped in the parking space 53A and wirelessly receives power from the supply device 50A, adjusting transferred power on the supply device 50A side and adjusting received power on the power reception apparatus 10 side may cause interference between power adjustment of the supply device 50A and power adjustment of the power reception apparatus 10.

For example, before initiation of forced charging of the battery 14, the supply device 50A adjusts the converter 62 such that the amount of received power received by the power reception apparatus 10 is equal to a predetermined amount of power (for example, 3 kW). When the state of charge (SOC) of the battery 14 is equal to a predetermined value, the vehicle 1 executes forced charging. At the time of forced charging of the battery 14, charging power supplied to the battery 14 may have to be decreased. Therefore, the vehicle ECU 37 adjusts the impedance of the filter 21 to decrease received power, thereby decreasing the amount of charging of the battery 14. At this point, an ammeter and a voltmeter disposed in the supply device 50A can measure the received power of the vehicle 1. Thus, the WPT supply site 2 adjusts the converter 62 such that the amount of received power of the power reception apparatus 10 is equal to a predetermined amount of power (3 kW). Consequently, the received power is not sufficiently decreased, and the vehicle 1 adjusts the filter 21 again. Power adjustment of the supply device 50A may interfere with power adjustment of the power reception apparatus 10.

In the first embodiment, in final compatibility check described below, the vehicle 1 acquires information related to whether or not a paired supply device has a power adjusting function. When the paired supply device has a power adjusting function, the vehicle 1 requests the WPT supply site 2 to transfer power by the supply device without adjusting power and adjusts power in the power reception apparatus 10. Details will be described below.

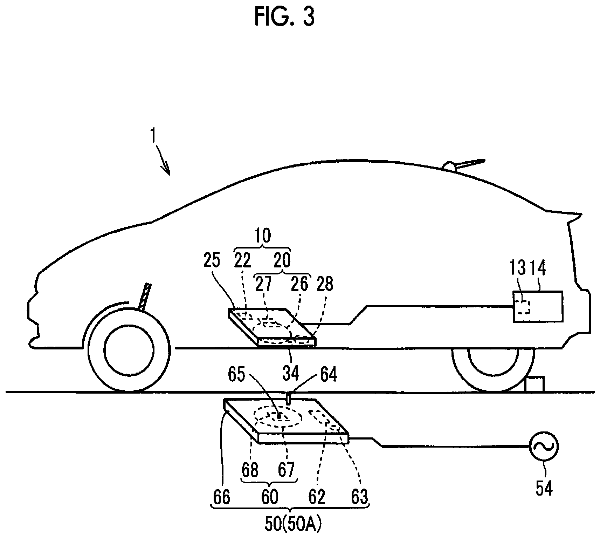

FIG. 3 is a side view schematically illustrating a state where the vehicle 1 is stopped in the parking space 53A.

As illustrated in FIG. 3, the power reception apparatus 10 includes an accommodation case 25. The accommodation case 25 accommodates the secondary device 20, the rectifier 22, and the like. A positioning mark 28 is drawn on the lower surface of the accommodation case 25. The secondary device 20 includes a secondary coil 26. In the first embodiment, the secondary device 20 includes the secondary coil 26 and a secondary capacitor 27 connected in series to the secondary coil 26. The secondary coil 26 and the secondary capacitor 27 form an LC resonator. The SDCC antenna 34 is disposed on the lower surface of the accommodation case 25.

Each supply device 50 includes an accommodation case 66. The accommodation case 66 accommodates the primary device 60, the converter 62, and the PDCC 63.

The primary device 60 includes a primary coil 67. In the first embodiment, the primary device 60 includes the primary coil 67 and a primary capacitor 68 connected to the primary coil 67. The primary coil 67 and the primary capacitor 68 form an LC resonator.

The camera 65 is disposed on the upper surface of the accommodation case 66. The camera 65 can detect the approaching vehicle 1 and measure the distance between the vehicle 1 and the supply device 50 or a positional relationship between the vehicle 1 and the supply device 50. Specifically, the camera 65 can measure the distance or the like between the supply device 50 and the power reception apparatus 10 by detecting the mark 28 drawn on the lower surface of the power reception apparatus 10.

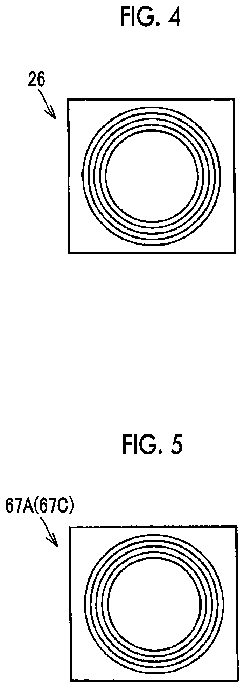

The PDCC antenna 64 is disposed on the upper surface of the accommodation case 66. FIG. 4 is a schematic diagram illustrating the secondary coil 26 disposed in the power reception apparatus 10. As illustrated in FIG. 4, the secondary coil 26 is a circular coil. The circular coil is formed by winding a coil wire around a winding axis line that extends in the up-down direction.

FIG. 5 is a schematic diagram schematically illustrating primary coils 67A, 67C disposed in the supply devices 50A, 50C. As illustrated in FIG. 5, the primary coils 67A, 67C are circular coils.

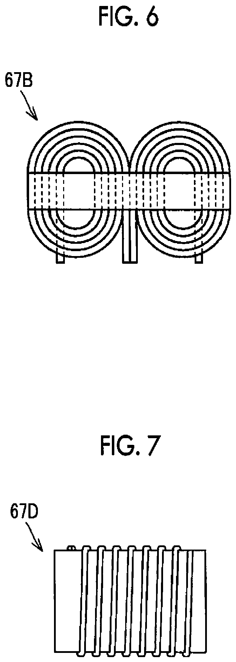

FIG. 6 is a schematic diagram schematically illustrating a primary coil 67B disposed in the supply device 50B. As illustrated in FIG. 6, the primary coil 67B is a double-D coil. The double-D coil is formed by connecting two coils (a first coil and a second coil) arranged in the horizontal direction. The wound directions of the two coils are opposite to each other. When a current having a frequency of approximately 85 kHz flows in the two coils, the directions of flows of the current flowing in each coil are opposite to each other.

FIG. 7 is a schematic diagram schematically illustrating a primary coil 67D disposed in the supply device 50D. As illustrated in FIG. 7, the primary coil 67D is a solenoid coil. The solenoid coil is formed such that a coil wire is wound around a winding axis line that extends in the horizontal direction.

The secondary coil 26, which is a circular coil illustrated in FIG. 4, is likely to be magnetically coupled with the primary coil 67A illustrated in FIG. 5. The secondary coil 26, which is a circular coil, is unlikely to be coupled with the primary coil 67B, which is a double-D coil illustrated in FIG. 6, or the primary coil 67D which is a solenoid coil illustrated in FIG. 7.

In the first embodiment, the vehicle 1 acquires information related to a coil type of each of the supply devices 50A to 50D from the WPT supply site 2.

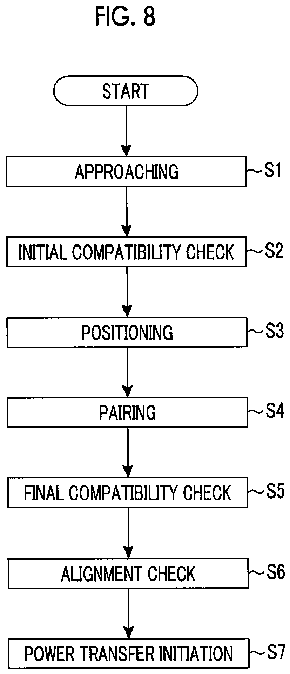

Next, a control from detection of the WPT supply site 2 by the vehicle 1 to initiation of power transfer will be described by using FIG. 8 and the like.

FIG. 8 is a flowchart illustrating a summary from detection of the WPT supply site 2 by the vehicle 1 to initiation of power transfer.

As illustrated in FIG. 8, each of the processes of approaching S1 to the WPT supply site, initial compatibility check S2, positioning S3, pairing S4, final compatibility check S5, alignment check S6, and power transfer initiation S7 is performed between the vehicle 1 and the WPT supply site 2 in a period from detection of the WPT supply site 2 by the vehicle 1 to initiation of power transfer.

Approaching S1 to the WPT supply site is a state before entering into the WPT supply site 2 or establishment of any communication with the WPT supply site 2. Approaching S1 to the WPT supply site 2 is started when a user switches ON the wireless charging switch 36 and is terminated by establishment of communication between the vehicle 1 and the WPT supply site 2.

In initial compatibility check S2, compatibility information of the power reception apparatus 10 is transmitted to the WPT supply site 2. The WPT supply site 2 transmits compatibility information of each of the supply devices 50A to 50D to the vehicle 1. Compatibility is checked to determine the presence of the supply devices 50 that can favorably transfer power to the power reception apparatus 10. The compatibility check can ascertain the supply devices 50 from which the vehicle 1 can receive power. The driver can select the supply device 50 suitable for the power reception apparatus 10 of the vehicle 1 and bring the vehicle 1 near to the supply device 50.

Positioning S3 is performed after initial compatibility check S2. In positioning S3, any guidance is provided to the driver of the vehicle 1 for favorable positioning between the vehicle 1 and the supply device 50 when the vehicle 1 enters the selected parking space 53 (WPT spot).

In the system according to the first embodiment, the camera 65 disposed in the selected supply device 50 is started to detect the vehicle 1. Image information captured by the camera 65 is transmitted to the vehicle 1 through the WLN antenna 52. The vehicle 1 includes an augmented reality system, displays the received image on the display unit 35, and displays various types of information for positioning on the display unit 35. The driver or the vehicle ECU 37 operates the vehicle 1 to position the vehicle 1 in accordance with the selected supply device 50.

Pairing S4 is performed after positioning S3 or during positioning S3. In pairing S4, a process that uniquely specifies the primary device 60 (supply device 50) at which the vehicle 1 is stopped or the primary device 60 (supply device 50) at which the vehicle 1 is to be stopped is performed.

Final compatibility check S5 is performed after pairing S4. In final compatibility check S5, the EVCC 31 transmits compatibility check information of the power reception apparatus 10 and a compatibility check request to the SECC 51. The SECC 51 responds to the EVCC 31 with compatibility check information and authentication.

In initial compatibility check S2, even when the supply device 50 suitable for the power reception apparatus 10 is selected, the driver may erroneously stop the vehicle 1 at the supply device 50 not suitable for the power reception apparatus 10. Therefore, in final compatibility check S5, the compatibility information of the actually paired supply device 50 is acquired, and compatibility between the power reception apparatus 10 and the supply device 50 is determined from the compatibility information of the power reception apparatus 10 and the compatibility information of the paired supply device 50. Specifically, a determination is performed as to whether or not the power reception apparatus 10 can favorably receive power transferred from the paired supply device 50.

Alignment check S6 is performed after final compatibility check S5 is performed.

Alignment check S6 is a process that is performed immediately before power transfer initiation S7 and checks a positional relationship between the secondary device 20 and the primary device 60 for a position in which the secondary device 20 can be favorably charged at the time of power transfer from the primary device 60.

For example, when timed charging is set, the vehicle 1 after final compatibility check S5 is in a standby state until power transfer initiation time arrives, and the vehicle 1 is left for a long amount of time. In the meantime, the vehicle 1 may slightly move by external force generated from insufficient braking. Therefore, favorableness of the relative positional relationship between the secondary device 20 and the primary device 60 is confirmed immediately before power transfer.

Power transfer initiation S7 is executed after alignment check S6 is performed. Power transfer initiation S7 is performed when the secondary device 20 is determined to be capable of favorably receiving power transferred from the paired supply device 50 in final compatibility check S5 and the positional relationship between the secondary device 20 and the primary device 60 is determined to be favorable in alignment check S6.

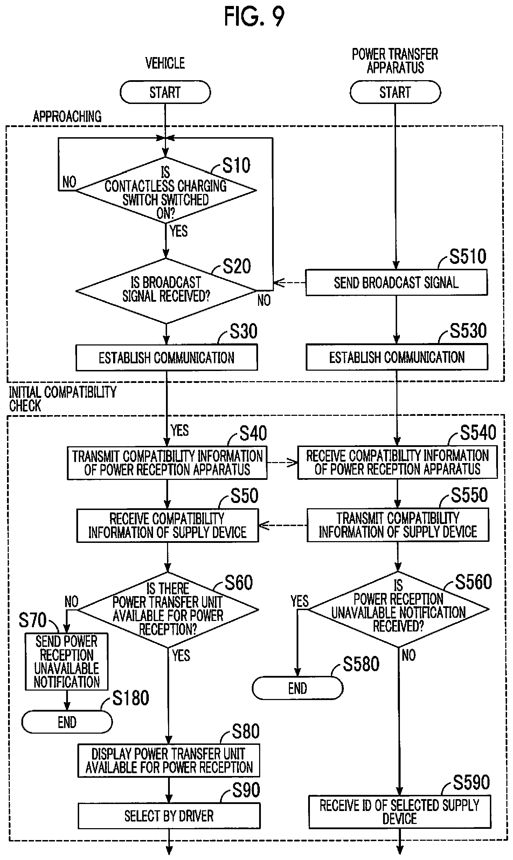

Next, details of approaching S1 to each WPT supply site to power transfer initiation S7 will be described by using FIG. 9 and the like.

FIG. 9 is a flowchart illustrating approaching S1 to the WPT supply site and initial compatibility check S2.

As illustrated in FIG. 9, in approaching S1 to the WPT supply site, first, a determination as to whether or not the wireless charging switch 36 is switched ON is performed in the vehicle 1 (step 10; corresponds to S10 in FIG. 9).

When the wireless charging switch 36 is not switched ON (NO in step 10), the EVCC 31 waits until the wireless charging switch 36 is switched ON.

When the EVCC 31 determines that the wireless charging switch 36 is switched ON (YES in step 10), the EVCC 31 determines whether or not a broadcast signal is received from the WPT supply site 2 (step 20).

The SECC 51 of the WPT supply site 2 periodically sends a broadcast signal through the WLN antenna 52 (step 510). The SECC 51 may send the broadcast signal when the supply device 50 available exists among the supply devices 50.

The EVCC 31 receives the broadcast signal from the WPT supply site 2 through the WLN antenna 33 when the vehicle 1 enters a communication area of the SECC 51.

The communication distances of the WLN antenna 52 and the WLN antenna 33 are, for example, a few tens of m to a few hundred m. Thus, the vehicle 1 can receive the broadcast signal in a position away from the WPT supply site 2.

When the EVCC 31 receives the broadcast signal, communication is established between the EVCC 31 of the vehicle 1 and the SECC 51 of the WPT supply site 2 through the WLN antenna 33 and the WLN antenna 52 (step 30 and step 530).

When communication is established between the EVCC 31 and the SECC 51, approaching S1 to the WPT supply site is terminated.

After establishment of communication, the vehicle ECU 37 may display the position of the WPT supply site 2 on the display unit 35 in order to let the driver know the presence of the WPT supply site 2.

When approaching S1 to the WPT supply site is terminated, initial compatibility check S2 is performed.

In initial compatibility check S2, first, the EVCC 31 of the vehicle 1 transmits the compatibility information of the power reception apparatus 10 to the WPT supply site 2 through the WLN antenna 33 (step 40).

The SECC 51 of the WPT supply site 2 acquires the compatibility information of the power reception apparatus 10 through the WLN antenna 52 (step 540). The SECC 51 transmits the compatibility information of all supply devices 50 through the WLN antenna 52 (step 550).

Elements of the compatibility information transmitted to the SECC 51 from the EVCC 31 include "WPT power classes", "air gap class", "WPT operating frequencies", "WPT frequency adjustment", "WPT type", "WPT (resonant) circuit topology", "fine positioning method", "pairing method", "initial alignment method", "power adjusting function presence information", and the like.

The compatibility information transmitted to the EVCC 31 by the SECC 51 in step 550 includes elements described below. The compatibility information transmitted by the SECC 51 in step 550 is the compatibility information of each of the supply devices 50A to 50D.

The elements of the compatibility information transmitted to the EVCC 31 by the SECC 51 include "multiple supply device", "supply device ID", "WPT power classes", "air gap class", "WPT operating frequencies", WPT frequency adjustment", "WPT type", "WPT (resonant) circuit topology", "fine positioning method", "pairing method", "initial alignment method", "power adjusting function presence information", and the like. The compatibility information of the power reception apparatus 10 transmitted from the EVCC 31 includes "power adjusting function presence information". The compatibility information transmitted from the EVCC 31 may not include all information except for "power adjusting function presence information".

The compatibility information of all supply devices 50 transmitted from the SECC 51 includes "power adjusting function presence information". The compatibility information transmitted from the SECC 51 may not include all information except for "power adjusting function presence information".

Next, details of each element name will be described. Each of the elements of the compatibility information transmitted to the SECC 51 from the EVCC 31 will be described. The same part of the compatibility information transmitted to the EVCC 31 from the SECC 51 as the compatibility information transmitted to the SECC 51 from the EVCC 31 will not be described.

"Air gap class" is information indicating an air gap class with which the secondary device 20 can receive power, and is denoted by, for example, "Z1", "Z2", and "Z3". "Z1", "Z2", and "Z3" mean, specifically, "Z1: 50 mm ≤ h ≤ 110 mm", "Z2: 100 mm ≤ h ≤ 160 mm", and "Z3: 130 mm ≤ h ≤ 210 mm". The distance between the secondary coil 26 and the primary coil 67 in the vertical direction is denoted by "h".

"Power class" is information indicating a power class with which the secondary device 20 can receive power, and is denoted by "MF-WPT1" to "MF-WPT4". "MF-WPT1" indicates that the maximum amount of received power is less than or equal to 3.7 kW. "MF-WPT2" indicates that the maximum amount of received power is greater than 3.7 kW and less than or equal to 7.7 kW. "MF-WPT3" indicates that the maximum amount of received power is greater than 7.7 kW and less than or equal to 22 kW. "MF-WPT4" indicates that the maximum amount of received power is greater than 22 kW.

"WPT operating frequencies" is information indicating the frequency of received power received by the secondary device 20. The WPT operating frequencies are denoted by values of "f1", "f2", "f3", and the like. Specifically, "f1" denotes "140 kHz (frequency range: ±6)". "f2" denotes "85 kHz (frequency range: ±3)". "f3" denotes "140 kHz (frequency range: ±0.5)". "f4" denotes "81.38 kHz to 90.00 kHz (frequency range: ±0)". "f5" denotes "20 kHz (frequency range: ±1)". "f6" denotes "60 kHz (frequency range: ±1)".

"WPT frequency adjustment" is information indicating adjustability of the operating frequency. When positional shifts, variations in clearance, uneven manufacturing of constituents, and the like occur, transfer efficiency is to fall within an allowed range by adjusting the operating frequency.

"WPT type" is information indicating a shape type of the secondary device 20. Specifically, "WPT type" indicates the coil shape of the secondary coil 26 and is denoted by values of "circular", "dd", "solenoid", and the like. The coil type illustrated in FIG. 4 is "circular". The coil type illustrated in FIG. 6 is "dd". The coil type illustrated in FIG. 7 is "solenoid".

"WPT circuit topology" is information indicating a connection structure between the secondary coil 26 and the secondary capacitor 27. Examples of the WPT circuit topology include series, parallel, and series-parallel. "Series" indicates that the secondary coil 26 and the secondary capacitor 27 are connected in series. "Parallel" indicates that the secondary coil 26 and the secondary capacitor 27 are connected in parallel. "Series-parallel" indicates that two secondary capacitors 27 are disposed, that one secondary capacitor 27 is connected in series to the secondary coil 26, and that the other secondary capacitor 27 is connected in parallel to the secondary coil 26.

"Fine positioning method" is information indicating which method is used to perform positioning when positioning is performed. Examples of the method for performing fine positioning include a manual method, methods using a magnetic vector signal (magnetic vector signal from supply device (primary MV) and magnetic vector signal from EV (secondary MV)), methods using low power (low power magnetic excitation from supply device (primary LPE) and low power magnetic excitation from EV (secondary LPE)), methods using Bluetooth (registered trademark) (Bluetooth Smart signal from supply device (primary Bluetooth) and Bluetooth Smart signal from EV (secondary Bluetooth)), methods using laser detection (radar detection of EV by supply device (primary radar) and radar detection of supply device by EV (secondary radar)), and methods using an augmented reality system (augmented reality on the supply device (primary AR) and augmented reality on EV (secondary AR)).

The vehicle 1 according to the present embodiment employs "secondary AR". In "secondary AR", the supply device 50 transmits, to the vehicle 1, an image signal that can be recognized by the vehicle 1 and used in augmented reality. The vehicle 1 displays information as to each supply device 50 to the driver.

Specifically, the camera 65 disposed in the supply device 50 transmits an image having the vehicle 1 and the power reception apparatus 10 to the vehicle 1 through the WLN antenna 52. The vehicle 1 receives the image information through the WLN antenna 33. The vehicle 1 displays the acquired image on the display unit 35 and displays various types of information for positioning on the display unit 35.

"Pairing method" is a method for performing pairing that specifies the supply device 50 at which the vehicle 1 is stopped. Examples of the pairing method include a method using a preprogrammed method (method name: preprogrammed), methods using a magnetic vector signal and an auxiliary coil ("primary MV" and "secondary MV"), a method using low power from the primary coil 67 (primary LPE), a method using low power from the secondary coil 26 (secondary LPE), and methods using Bluetooth ("primary Bluetooth" and "secondary Bluetooth"). The vehicle 1 and the WPT supply site 2 according to the first embodiment employ "secondary Bluetooth". The method using Bluetooth is a method for specifying the primary device 60 at which the vehicle 1 is stopped, by using Bluetooth for short-range communication. Specifically, Bluetooth for short-range communication is used between the SDCC 32 and the SDCC antenna 34 and between the PDCC 63 and the PDCC antenna 64 to exchange information, thereby performing pairing.

"Initial alignment method" indicates a method for confirming a relative position of the secondary device 20 and the primary device 60 before power transfer initiation. Examples of the initial alignment method include a method using efficiency check (method name: efficiency), a method using a directional signal from the vehicle (directional signal from EV (method name: EV signal)), and a method using image information.

In the first embodiment, the vehicle 1 and the WPT supply site 2 employ the method using image information. "Multiple supply device" is information indicating that the SECC 51 controls each of the supply devices 50. In the first embodiment, one SECC 51 controls the supply devices 50.

"Power adjusting function presence information" transmitted to the SECC 51 from the EVCC 31 is information indicating whether or not the power reception apparatus 10 has a received power adjusting function. As in the power reception apparatus 10 of the first embodiment, when received power can be adjusted by adjusting the impedance of the filter 21, "power adjusting function presence information" is set to indicate that "power adjusting function is present". While various methods are considered as a method that can adjust received power, "power adjusting function presence information" in any method is set to indicate that "power adjusting function is present" when received power can be adjusted.

"Power adjusting function presence information" transmitted to the EVCC 31 from the SECC 51 is information indicating whether or not each supply device 50 has a transferred power adjusting function. In the first embodiment, the supply devices 50A, 50B can adjust transferred power in the converters 62A, 62B. The supply devices 50C, 50D cannot adjust transferred power in converters 62C, 62D. Thus, "power adjusting function presence information" of the supply devices 50A, 50B is set to indicate that "power adjusting function is present". "Power adjusting function presence information" of the supply devices 50C, 50D is set to indicate that "power adjusting function is not present".

In FIG. 9, the EVCC 31 determines whether or not there is the supply device 50 from which the power reception apparatus 10 can receive power, based on the compatibility information received from the WPT supply site 2 and the compatibility information of the power reception apparatus 10 (step 60).

Specifically, when the EVCC 31 determines that there is no supply device 50 that matches the elements of "WPT power classes", "air gap class" "WPT operating frequencies", "WPT type", "fine positioning method", "pairing method", "initial alignment method", and "power adjusting function presence information" of the power reception apparatus 10 (NO in step 60), the EVCC 31 transmits a power reception unavailable notification through the WLN antenna 33 (step 70). The vehicle ECU 37 places the EVCC 31 into a standby state and terminates the process (step 180). At this point, the rectifier 22 and the charging relay 13 are switched OFF, and the power reception apparatus 10 is in a state incapable of receiving power from the supply devices 50. The EVCC 31 is in a standby state capable of communication (WPT_V_SV).

When the SECC 51 receives the power reception unavailable notification (YES in step 560), the SECC 51 is placed into a standby state (WPT_S_SV), and the process is terminated (step 560).

In the determination based on "power adjusting function presence information" of the power reception apparatus 10 and each supply device 50, the power reception apparatus 10 has a power adjusting function. Thus, even when all supply devices 50A to 50D do not have a transferred power adjusting function, the EVCC 31 does not transmit the power reception unavailable notification for the reason that all supply devices 50A to 50D do not have a transferred power adjusting function.

When there is no supply device 50 that matches the element of "WPT circuit topology", the power reception unavailable notification is not sent for the reason that the element of "WPT circuit topology" does not match. The secondary device 20 can receive power transferred from the primary device 60 even when the connection structure in the secondary device 20 is different from the connection structure in the primary device 60. The element of "WPT circuit topology" is used as reference information.

In the compatibility determination related to "WPT power classes", "air gap class", "WPT operating frequencies", "WPT type", "fine positioning method", "pairing method", and "initial alignment method", when there is a supply device that matches each of the elements of the power reception apparatus 10, the supply device is determined to be compatible with each element.

For example, in "WPT type", when the shape of the primary coil is different from the shape of the secondary coil, the power reception apparatus 10 cannot favorably receive power transferred from the supply device 50. For example, when the primary coil is a double-D coil or a solenoid coil and the secondary coil is a circular coil, the secondary coil which is a circular coil cannot favorably receive power transferred from the primary coil. Thus, in step 60, a determination related to "WPT type" is performed as to whether or not there is a supply device that matches "WPT type" of the power reception apparatus 10.

The primary coils of the supply device 50A and the supply device 50C are circular coils, and the secondary coil of the power reception apparatus 10 is a circular coil. Thus, when each of the elements of "WPT power classes", "air gap class", "WPT operating frequencies", "fine positioning method", "pairing method"; and "initial alignment method" in the supply device 50A and the supply device 50C matches the power reception apparatus 10, the EVCC 31 determines that power can be received from the supply device 50A and the supply device 50C.

In the first embodiment, the elements of the supply device 50A and the supply device 50C except for "WPT type" match the power reception apparatus 10.

Thus, the vehicle ECU 37 determines that "there is a supply device available for power reception" in "step 60" (YES in step 60). The vehicle ECU 37 displays the supply device 50A and the supply device 50C as a supply device available for power reception on the display unit 35 (step 80).

The driver selects one of the supply devices 50A, 50C (step 90). The vehicle ECU 37 transmits an ID of the selected supply device 50 from the EVCC 31 through the WLN antenna 33.

The SECC 51 of the WPT supply site 2 receives the ID of the selected supply device 50 through the WLN antenna 52 (step 590). In the first embodiment, the driver selects the supply device 50A, and the ID specifying the supply device 50A is transmitted to the SECC 51 from the EVCC 31.

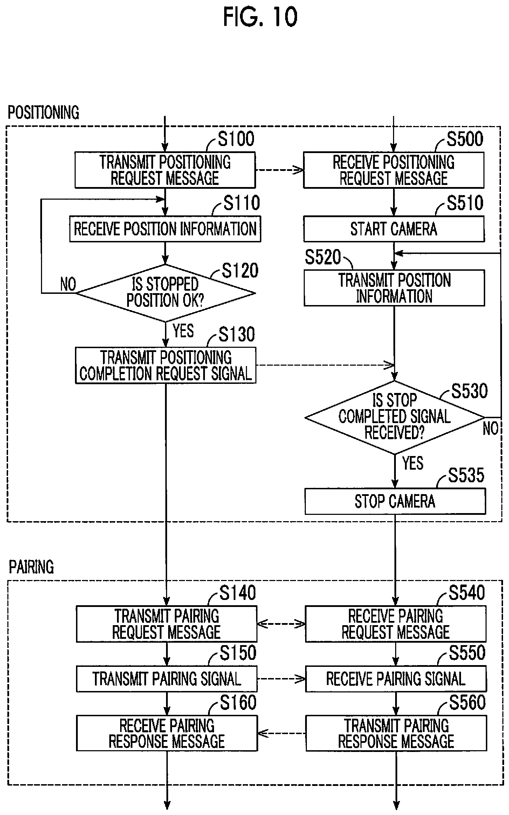

FIG. 10 is a flowchart illustrating positioning S3 and pairing S4. Positioning S3 is performed after initial compatibility check S2 is completed.

When initial compatibility check S2 is completed, the EVCC 31 in the vehicle 1 transmits a positioning request message (the fine positioning request message) through the WLN antenna 33 (step 100). When the SECC 51 of the WPT supply site 2 receives the positioning request message through the WLN antenna 52 (step 500), the SECC 51 starts the camera 65 (step 510). The positioning request message includes the ID that specifies the supply device 50A selected by the driver in initial compatibility check S2. When the SECC 51 receives the positioning request message, the SECC 51 starts the camera 65 of the supply device 50A specified by the ID included in the positioning request message.

The camera 65 of the supply device 50A captures the surrounding area. When the camera 65 detects the vehicle 1, the SECC 51 transmits position information of the power reception apparatus 10 with respect to the supply device 50A as a reference to the vehicle 1 (step 520). The position information transmitted by the SECC 51 includes the image information captured by the camera 65. In addition to the image information, the position information may include information indicating a relative positional relationship between the supply device 50A and the secondary device 20.

The EVCC 31 receives the position information through the WLN antenna 33 (step 110). The vehicle ECU 37 acquires the position information acquired by the EVCC 31 and displays the position information on the display unit 35. At this point, the image captured by the camera 65 is displayed, and the information indicating the relative positional relationship between the supply device 50A and the secondary device 20, and the like are displayed on the image. A schematic diagram illustrating the relative positional relationship between the supply device 50A and the secondary device 20 may be displayed instead of the image captured by the camera 65.

The information indicating the relative positional relationship between the supply device 50A and the secondary device 20 includes the distance between the supply device 50A and the secondary device 20 and the angles of the supply device 50A and the secondary device 20. The angles of the supply device 50A and the secondary device 20 are angles with an X direction (the direction of entering into the parking space 53) in FIG. 1 set as zero degrees.

The driver can move and stop the vehicle 1 based on the information displayed on the display unit 35 such that the power reception apparatus 10 is positioned above the supply device 50A. When the vehicle ECU 37 detects a shift range being changed to a parking range, the vehicle ECU 37 causes the EVCC 31 to determine whether or not the stopped position is appropriate.

The EVCC 31 determines whether or not the stopped position of the vehicle 1 is appropriate, based on the received position information (step 120).

When the EVCC 31 determines that the stopped position is not appropriate, the EVCC 31 continues acquisition of the position information (NO in step 120). Accordingly, the driver can adjust the stopped position again.

When the EVCC 31 determines that the stopped position is appropriate (YES in step 120), the EVCC 31 transmits a positioning completion request signal (the fine positioning complete request) to the SECC 51 through the WLN antenna 33 (step 130).

When the SECC 51 receives the positioning completion request signal (step 530), the SECC 51 stops driving the camera 65 of the supply device 50A (step 535).

Accordingly, positioning S3 is terminated. When positioning S3 is terminated, pairing S4 is performed.

In pairing S4, the EVCC 31 transmits a pairing request message signal through the WLN antenna 33 (step 140).

When the SECC 51 acquires the pairing request message through the WLN antenna 52, the SECC 51 waits for reception of a pairing signal for a predetermined amount of time (the pairing signal time tPS).

After the EVCC 31 transmits the pairing request signal, the EVCC 31 transmits a pairing signal through the SDCC 32 and the SDCC antenna 34 (step 150). The communication distances of the SDCC 32 and the SDCC antenna 34 are approximately 1 m. Thus, the PDCC 63 can communicate with the SDCC antenna 34 of the vehicle 1 stopped immediately above the supply device 50 in which the PDCC 63 is disposed.

The PDCC 63 of the supply device 50 at which the vehicle 1 is stopped receives the pairing signal through the PDCC antenna 64 (step 550). When the PDCC 63 receives the pairing signal, the PDCC 63 notifies the SECC 51 that the pairing signal is received. The pairing signal includes an ID that specifies the vehicle 1. Accordingly, the SECC 51 can recognize that the vehicle 1 is stopped at the supply device 50A of the supply devices 50.

The SECC 51 transmits a pairing response message through the WLN antenna 52 (step 560). The pairing response message includes the ID of the supply device 50A. The EVCC 31 can recognize that the supply device at which the vehicle 1 is stopped is the supply device 50A, by receiving the pairing response message.

Accordingly, the vehicle 1 and the WPT supply site 2 can specify the supply device 50A at which the vehicle 1 is stopped.

While pairing S4 is performed after completion of positioning S3 in the first embodiment, pairing S4 may be initiated before completion of positioning S3.

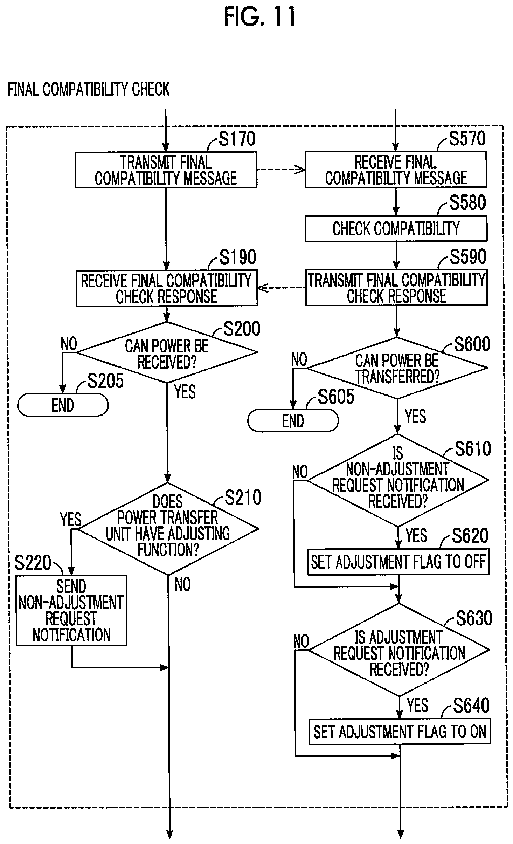

FIG. 11 is a flowchart illustrating final compatibility check S5. As illustrated in FIG. 11, final compatibility check S5 is performed after pairing S4 is completed.

In final compatibility check S5, the EVCC 31 transmits a final compatibility message (final compatibility check compatibility message) (final compatibility check request) through the WLN antenna 33 (step 170). The final compatibility message includes information corresponding to element names described below and the ID specifying the supply device 50A paired with the vehicle 1.

Examples of the element names included in the final compatibility message include "WPT power classes", "maximum receivable power", "air gap class", "operating frequency", "WPT type", "WPT (resonant) circuit topology", and "power adjusting function presence information".

The SECC 51 receives the final compatibility message through the WLN antenna 52 (step 570). The SECC 51 specifies that the supply device paired with the vehicle 1 is the supply device 50A, based on the ID specifying the supply device paired with the vehicle 1. The SECC 51 checks compatibility between the paired supply device 50A and the power reception apparatus 10 based on the compatibility information of the power reception apparatus 10 included in the final compatibility message (step 580).

For example, when the element of "air gap class", "WPT type", "WPT power classes", or the like do not match, the SECC 51 determines that the power reception apparatus 10 is not compatible with the supply device 50A.

In the first embodiment, the WPT type of the power reception apparatus 10 is the same as the WPT type of the supply device 50A. When the WPT types are different from each other, the SECC 51 determines that the power reception apparatus 10 is not compatible with the supply device 50A.

In the present embodiment, the SECC 51 determines compatibility between the power reception apparatus 10 and the supply device 50A also based on "power adjusting function presence information" of the power reception apparatus 10 acquired and "power adjusting function presence information" of the supply device 50A paired with the vehicle 1.

When at least one of the power reception apparatus 10 and the supply device 50A has a power adjusting function, the SECC 51 determines that the power reception apparatus 10 is compatible with the supply device 50A with respect to a power adjusting function.

In the first embodiment, the power reception apparatus 10 has a received power adjusting function, and the supply device 50A also has a transferred power adjusting function. Thus, in the compatibility determination based on "power adjusting function presence information", the SECC 51 determines that the power reception apparatus 10 is compatible with the supply device 50A.

When the compatibility check is terminated, the SECC 51 transmits a final compatibility check response signal through the WLN antenna 52 (step 590). Examples of elements of information included in the final compatibility check response signal include "success code", "minimum power", "maximum power", "WPT type", "WPT (resonant) circuit topology", and "power adjusting function presence information".

The EVCC 31 receives the final compatibility check response signal through the WLN antenna 33 (step 190). The EVCC 31 determines whether or not power can be favorably received from the supply device 50A (step 200).

For example, the EVCC 31 performs the determination based on the received elements of "WPT type", "maximum power", "power adjusting function", and the like of the supply device 50A and the elements of "WPT type", "maximum power", "power adjusting function presence information", and the like of the power reception apparatus 10.

For example, when "WPT type" of the power reception apparatus 10 is different from "WPT type" of the supply device 50A, the EVCC 31 determines that the power reception apparatus 10 cannot favorably receive power from the supply device 50A.

Particularly, in the present embodiment, the EVCC 31 determines whether or not the power reception apparatus 10 can favorably receive power from the supply device 50A, based on received "power adjusting function presence information" of the supply device 50A and "power adjusting function presence information" of the power reception apparatus 10.

Specifically, when both of the power reception apparatus 10 and the supply device 50A do not have a power adjusting function, the EVCC 31 determines that the power reception apparatus 10 cannot favorably receive power. When at least one of the power reception apparatus 10 and the supply device 50A has a power adjusting function, the EVCC 31 determines that the power reception apparatus 10 can favorably receive power. In the first embodiment, both of the power reception apparatus 10 and the supply device 50A have a power adjusting function. Thus, the EVCC 31 determines that the power reception apparatus 10 can favorably receive power from the supply device 50A, with respect to "power adjusting function presence information".

Information related to the elements of "WPT type", "maximum power", "power adjusting function", and the like of the power reception apparatus 10 is stored in the EVCC 31.

While the EVCC 31 determines compatibility based on the information received from the SECC 51 in the first embodiment, the EVCC 31 may determine compatibility based on the success code received from the SECC 51. For example, when the success code indicates bad compatibility between the power reception apparatus 10 and the supply device 50A, the EVCC 31 determines that the power reception apparatus 10 cannot favorably receive power from the supply device 50A.

When the EVCC 31 determines that power cannot be favorably received (NO in step 200), the EVCC 31 is placed into a standby state, and the process is terminated (step 205). In such a case, the power reception apparatus 10 is not in a state of receiving power. Specifically, the OFF state of the charging relay 13 is maintained, and the stopped state of the rectifier 22 is maintained.

When the EVCC 31 determines that the power reception apparatus 10 can favorably receive power from the supply device 50A (YES in step 200), the EVCC 31 determines whether or not the supply device 50A has a transferred power adjusting function (step 210).

Specifically, the EVCC 31 determines whether or not the supply device 50A has a transferred power adjusting function, based on the received final compatibility check response signal.

When the EVCC 31 determines that the supply device 50A has an adjusting function (YES in step 210), the EVCC 31 transmits a non-adjustment request notification through the WLN antenna 33 (step 220). The non-adjustment request notification includes the ID specifying the supply device 50A.

In the first embodiment, the power reception apparatus 10 has a received power adjusting function, and the vehicle 1 is a vehicle adjusting power during power reception.

The vehicle 1 according to the first embodiment transmits the non-adjustment request notification to the SECC 51 to request the supply device 50A to stop adjusting transferred power, and the power reception apparatus 10 adjusts received power. Accordingly, variations in received power due to power adjustment by both of the power reception apparatus 10 and the supply device 50A can be reduced.

When the vehicle 1 is stopped at the supply device 50C and is paired with the supply device 50C, the EVCC 31 does not transmit the non-adjustment request notification since the converter 62 of the supply device 50C does not have a transferred power adjusting function.

After the SECC 51 transmits the final compatibility check response signal, the SECC 51 determines whether or not the supply device 50A can transfer power such that the power reception apparatus 10 can favorably receive power (step 600). Specifically, when the SECC 51 in step 580 determines that compatibility between the power reception apparatus 10 and the supply device 50A is bad, the SECC 51 determines that the supply device 50A cannot favorably transfer power (NO in step 600). In such a case, the process performed with the vehicle 1 is terminated (step 605).

When the SECC 51 in step 580 determines that compatibility between the power reception apparatus 10 and the supply device 50A is good, the SECC 51 determines that the supply device 50A can transfer power such that the power reception apparatus 10 can favorably receive power (YES in step 600). In such a case, the SECC 51 determines whether or not the non-adjustment request notification is received (step 610).

When the SECC 51 determines that the non-adjustment request notification is received, the SECC 51 specifies the supply device 50A based on the ID of the supply device included in the non-adjustment request notification and maintains an OFF state of an adjustment flag for the supply device 50A (step 620). The adjustment flag is set to OFF in an initial state. Specifically, the adjustment flag is set to OFF (step 670) immediately before termination of power transfer initiation S7 described below. When power is transferred to another vehicle, the adjustment flag is in an OFF state.

When the SECC 51 determines that the non-adjustment request notification is not received (NO in step 610), the SECC 51 determines whether or not an adjustment request notification is received (step 630). Among vehicles, there is a vehicle that does not have a received power adjusting function. There is also a vehicle that adjusts received power regardless of the presence of a received power adjusting function by causing a supply device to adjust transferred power. When such a vehicle is stopped at the supply device 50A, the vehicle transmits the adjustment request notification. The adjustment request notification includes the ID of the supply device. In the vehicle 1 according to the first embodiment, the power reception apparatus 10 adjusts received power. Thus, the EVCC 31 does not transmit the adjustment request signal.

When the SECC 51 receives the adjustment request notification, the SECC 51 specifies the supply device 50 based on the ID of the supply device included in the adjustment request signal and sets the adjustment flag to ON for the supply device 50 (step 640). In the first embodiment, the adjustment flag related to the supply device 50A is not set to ON.

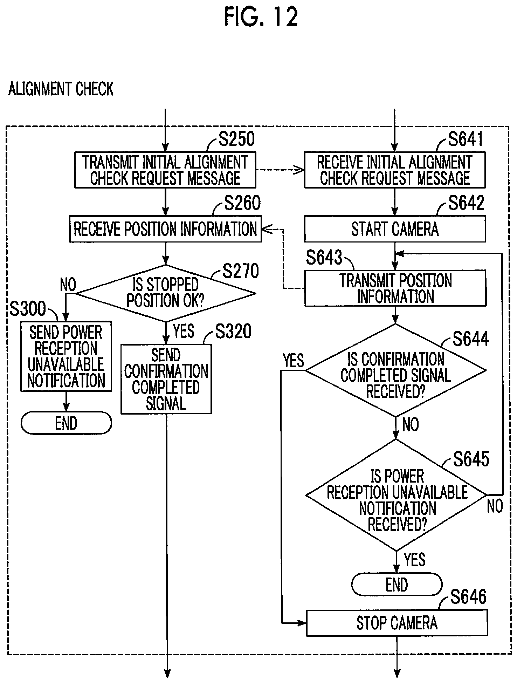

Final compatibility check S5 is terminated. FIG. 12 is a flowchart illustrating alignment check (initial alignment check) S6.

As illustrated in FIG. 12, alignment check S6 is performed when final compatibility check S5 is completed.

In alignment check S6, the EVCC 31 transmits an initial alignment check request message through the WLN antenna 33 (step 250). The initial alignment check request message includes the ID specifying the supply device paired with the vehicle 1.

When the SECC 51 receives the initial alignment check request message (step 641), the SECC 51 starts the camera 65 (step 642). Specifically, the SECC 51 starts the camera 65 of the supply device specified by the ID included in the initial alignment check request message.

The camera 65 detects the mark 28 drawn on the accommodation case 25 of the power reception apparatus 10. The SECC 51 calculates the position of the power reception apparatus 10 based on the information captured by the camera 65. The SECC 51 transmits the position information of the power reception apparatus 10 through the WLN antenna 52 (step 643).

The EVCC 31 receives the position information of the power reception apparatus 10 through the WLN antenna 33 (step 260). The EVCC 31 determines whether or not the stopped position of the vehicle 1 is appropriate (step 270). Specifically, the EVCC 31 determines whether or not the power reception apparatus 10 is positioned in a position capable of favorably receiving power from the supply device 50A, based on the received position information.

When the EVCC 31 determines that the stopped position of the vehicle 1 is not an appropriate position (NO in step 270), the EVCC 31 transmits a power reception unavailable notification through the WLN antenna 33 (step 300). The EVCC 31 is placed into a standby state, and the process is terminated.

When the EVCC 31 determines that the stopped position of the vehicle 1 is an appropriate position (YES in step 270), the EVCC 31 transmits a confirmation completed signal through the WLN antenna 33 (step 320).

After the SECC 51 transmits the position information, the SECC 51 determines whether or not the confirmation completed signal is received (step 644). When the SECC 51 determines that the confirmation completed signal is not received (NO in step 644), the SECC 51 determines whether or not the power reception unavailable notification is received (step 645). When the SECC 51 determines that the power reception unavailable notification is not received (NO in step 645), the SECC 51 continues transmitting the position information (step 643) and confirming whether or not the confirmation completed signal is received (steps 644, 645).

When the SECC 51 determines that the power reception unavailable notification is received, the SECC 51 stops the process. Accordingly, the supply device 50A does not transfer power, and driving of the camera 65 is stopped.

When the SECC 51 does not receive the power reception unavailable notification and receives the confirmation completed signal (YES in step 644), the SECC 51 stops driving the camera 65 (step 646). Accordingly, alignment check S6 is completed.

While alignment check S6 is performed after final compatibility check S5 in the first embodiment, alignment check S6 may be performed during final compatibility check S5. Alternatively, final compatibility check S5 may be performed after alignment check S6.

While alignment check S6 is performed by using the camera 65 in the present embodiment, the power reception apparatus 10 and the supply device 50A may perform the alignment check based on efficiency. Specifically, the supply device 50A transfers power, and the SECC 51 notifies the EVCC 31 of the amount of transferred power transferred by the supply device 50A. The vehicle 1 measures the amount of power received by the power reception apparatus 10, and the EVCC 31 notifies the SECC 51 of the amount of received power. The supply device 50A stops transferring power. When both of the EVCC 31 and the SECC 51 determine that power reception efficiency calculated from the amount of received power and the amount of transferred power is within a predetermined range, the power reception apparatus 10 and the supply device 50A are determined to be positioned within an allowed range.

Alignment check S6 may be performed by using the SDCC antenna 34 and the PDCC antenna 64.

Specifically, the vehicle 1 transmits a directional signal through the SDCC antenna 34. When the power reception apparatus 10 and the supply device 50A are positioned within an allowed range, the PDCC antenna 64 of the supply device 50A can receive the directional signal.

When the supply device 50A receives the directional signal, the supply device 50A notifies the vehicle 1 that a positional relationship between the power reception apparatus 10 and the supply device 50A is appropriate. When the supply device 50A does not receive the directional signal within a predetermined amount of time, the SECC 51 notifies the EVCC 31 that the directional signal is not received. The supply device 50A does not transfer power, and the SECC 51 is placed into a standby state. The EVCC 31 is also placed into a standby state.

Accordingly, alignment check S6 may be performed by using the SDCC antenna 34 and the PDCC antenna 64.

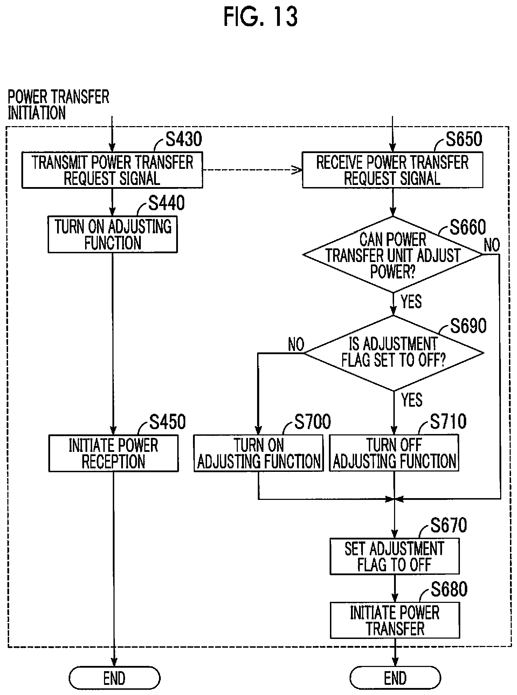

FIG. 13 is a flowchart illustrating power transfer initiation S7. As illustrated in FIG. 13, the EVCC 31 transmits a power transfer request (perform power transfer request) signal through the WLN antenna 33 (step 430). The power transfer request signal includes the ID specifying the paired supply device. In the first embodiment, the power transfer request signal includes the ID of the supply device 50A. The EVCC 31 starts the received power adjusting function of the filter 21 (step 440) and initiates power reception (step 450).

When the SECC 51 receives the power transfer request signal (step 650), the SECC 51 determines whether or not the supply device specified by the ID included in the power transfer request signal has a transferred power adjusting function (step 660).

When the SECC 51 determines that the supply device specified by the ID included in the power transfer request signal does not have a transferred power adjusting function (step 660), the SECC 51 sets the adjustment flag of the supply device to OFF (step 670). The SECC 51 initiates power transfer from the supply device (step 680). At this point, since the supply device does not have a transferred power adjusting function, the supply device transfers constant power.

In final compatibility check S5 illustrated in FIG. 11, the EVCC 31 and the SECC 51 terminate the process when both of the power reception apparatus and the supply device do not have a power adjusting function (step 205 and step 605). Thus, in power transfer initiation S7, there is no case where both of the power reception apparatus and the supply device do not have a power adjusting function. When the supply device does not have a transferred power adjusting function, the power reception apparatus has a received power adjusting function.

When the SECC 51 determines that the supply device specified by the power transfer request signal has a transferred power adjusting function (YES in step 660), the SECC 51 determines whether or not the adjustment flag is OFF (step 690).

In final compatibility check S5 illustrated in FIG. 11, when the EVCC 31 determines that the paired supply device can adjust transferred power (step 210), the EVCC 31 transmits the non-adjustment request notification (step 220), and the adjustment flag of the supply device may be set to OFF.

When the SECC 51 determines that the adjustment flag of the supply device specified by the ID included in the power transfer request signal is OFF (YES in step 690), the SECC 51 does not cause the converter 62 of the supply device to adjust transferred power (step 710), maintain the OFF state of the adjustment flag (step 670), and initiates power transfer (step 680). Thus, transfer of constant power is initiated from the supply device.

In the first embodiment, the vehicle 1 is stopped at the supply device 50A. The converter 62 of the supply device 50A has a power adjusting function. The SECC 51 receives the non-adjustment request notification for the supply device 50A. Thus, the supply device 50A transfers constant power without adjusting power transfer by the converter 62.

The power reception apparatus 10 adjusts received power by the filter 21. Specifically, when the amount of received power is greater than a target amount of power determined by the vehicle ECU 37, the amount of received power can be set to the target value by adjusting the variable capacitor or the variable inductor of the filter 21. For example, when the state of charge (SOC) of the battery 14 approaches a fully charged state, the filter 21 reduces the received power to a small amount, and forced charging can be performed.

When the SECC 51 determines that the adjustment flag is not OFF with respect to the supply device specified by the ID included in the power transfer request signal (NO in step 690), the SECC 51 turns ON the adjusting function of the supply device (step 700), switches the adjustment flag OFF (step 670), and initiates power transfer (step 680).

As described above, the vehicle 1 according to the first embodiment adjusts received power in the power reception apparatus 10 and requests the supply device 50A at which the vehicle 1 is stopped to stop adjusting transferred power. Accordingly, adjustment of received power by the power reception apparatus 10 can be prevented from being performed at the same time as adjustment of transferred power by the supply device 50A.

### Second Embodiment

The vehicle 1 according to the first embodiment has a received power adjusting function. The vehicle 1 requests the supply device to stop adjusting transferred power, and the power reception apparatus 10 adjusts received power.

A vehicle 1A according to a second embodiment has a received power adjusting function. However, when the supply device where the vehicle 1A is stopped and paired has a transferred power adjusting function, the vehicle 1A requests the supply device to adjust transferred power and stops received power adjustment of a power reception apparatus 10A.

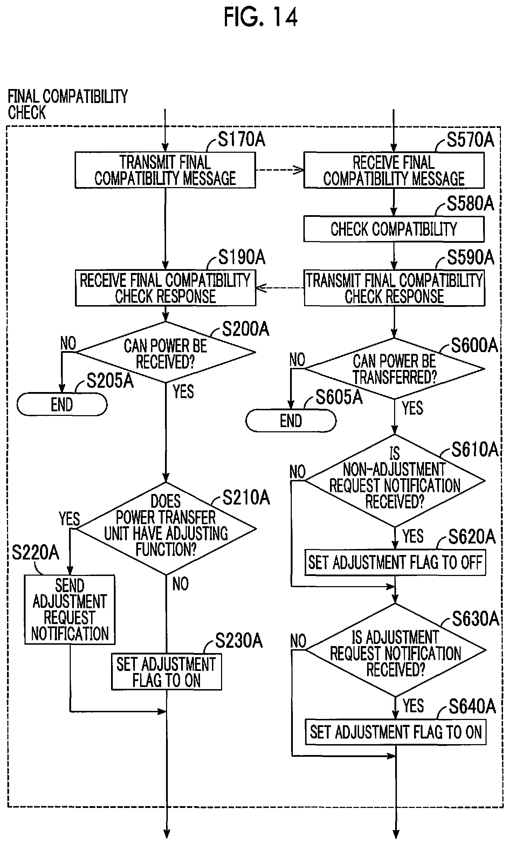

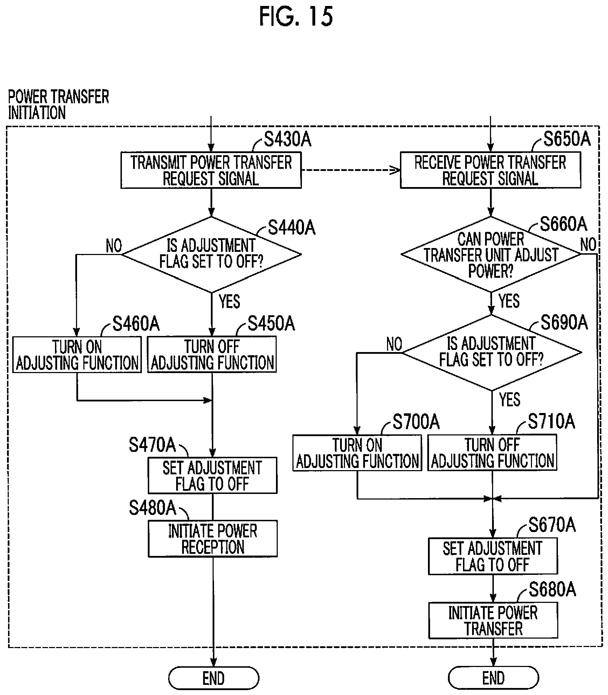

Next, each of flows of the vehicle 1A and a WPT supply site 2A according to the second embodiment will be described by using FIG. 14 and FIG. 15.

In FIG. 2, the vehicle 1A includes a filter 21A that can adjust received power, in the same manner as the vehicle 1 according to the first embodiment. The WPT supply site 2A according to the second embodiment has substantially the same configuration and the control flow as the WPT supply site 2 according to the first embodiment. The vehicle 1A according to the first embodiment has substantially the same configuration as the vehicle 1 according to the first embodiment.

In the second embodiment, the vehicle 1A approaches the WPT supply site 2A (approaching S1) and performs initial compatibility check with the WPT supply site 2A. Then, the vehicle 1A performs positioning, pairing, and alignment check with the supply device 50A.

In the second embodiment, approaching S1 to the WPT supply site, initial compatibility check S2, positioning S3, pairing S4, and alignment check S6 are the same as in the first embodiment.

Details of final compatibility check S5 and power transfer initiation S7 will be described. FIG. 14 is a flowchart illustrating final compatibility check S5 of the vehicle 1A and the WPT supply site 2A according to the second embodiment.

In FIG. 14, steps 170A, 190A, 200A, 205A of the control of the vehicle 1A are the same as steps 170, 190, 200, 205 of the first embodiment. Final compatibility check S5 of the WPT supply site 2A is the same as final compatibility check S5 according to the first embodiment. Steps 210A, 220A, 230A of the control of the vehicle 1A are different from the control of the vehicle 1 according to the first embodiment. Therefore, steps 210A, 220A, 230A will be mainly described.

When the EVCC 31 in step 200A determines that power can be received (YES in step 200A), the EVCC 31 determines whether or not the paired supply device has a transferred power adjusting function (step 210A). Specifically, in step 190A, the EVCC 31 acquires the final compatibility check response signal of the paired supply device. The final compatibility check response signal includes information related to "presence of a power adjusting function". When the EVCC 31 acquires information indicating that the paired supply device does not have a transferred power adjusting function, the EVCC 31 determines that the supply device does not have a transferred power adjusting function (NO in step 210A). When the EVCC 31 acquires information indicating that the paired supply device has a transferred power adjusting function, the EVCC 31 determines that the supply device has a transferred power adjusting function (YES in step 210A).

When the EVCC 31 determines that the supply device does not have a transferred power adjusting function (NO in step 210A), the EVCC 31 sets the adjustment flag to ON (step 230A). When the EVCC 31 determines that the supply device has a transferred power adjusting function (YES in step 210A), the EVCC 31 transmits the adjustment request notification through the WLN antenna 33 (step 220A). In the second embodiment, the EVCC 31 transmits the adjustment request notification since the supply device 50A has a transferred power adjusting function.

When the SECC 51 determines that the supply device 50A can favorably transfer power to the power reception apparatus 10A (YES in step 600A), the SECC 51 determines whether or not the non-adjustment request notification is received (step 610A). When the SECC 51 determines that the non-adjustment request notification is received, the SECC 51 sets the adjustment flag to OFF (maintains the OFF state thereof) (step 620A). The SECC 51 determines whether or not the adjustment request notification is received (step 630A). When the SECC 51 determines that the adjustment request notification is received (YES in step 630A), the SECC 51 sets the adjustment flag to ON (switches the adjustment flag from OFF to ON) (step 640A).

In the second embodiment, the EVCC 31 transmits the adjustment request notification, and the SECC 51 switches the adjustment flag ON.

FIG. 15 is a flowchart illustrating power transfer initiation S7 in the vehicle 1A and the WPT supply site 2A according to the second embodiment.

The control flow of the WPT supply site 2A in power transfer initiation S7 of the second embodiment is the same as the control flow of the WPT supply site 2 according to the first embodiment.

The control flow of the vehicle 1A in power transfer initiation S7 is different from the control flow of the vehicle 1 of the first embodiment. Therefore, the vehicle 1A will be mainly described.

As illustrated in FIG. 15, when power transfer initiation S7 is initiated, the EVCC 31 transmits the power transfer request signal to the WPT supply site 2A. The power transfer request signal includes the ID of the supply device 50A paired with the vehicle 1A.

The EVCC 31 determines whether or not the adjustment flag is OFF (step 440A). When the adjustment flag is ON (NO in step 440A), the EVCC 31 causes the filter 21A to adjust received power (step 460A). When the EVCC 31 determines that the adjustment flag is OFF (YES in step 440A), the EVCC 31 turns OFF adjustment of received power by the filter 21A at the time of power reception (step 450A).

The EVCC 31 sets the adjustment flag to OFF (step 470A) and initiates power reception (step 480A).

In the second embodiment, the OFF state of the adjustment flag is maintained in final compatibility check S5 (YES in step 210A), and received power is not adjusted on the power reception apparatus 10A side at the time of power reception.

In the second embodiment, in final compatibility check S5, the EVCC 31 transmits the adjustment request notification (step 220A), and the SECC 51 sets the adjustment flag to ON (step 640A). Thus, the SECC 51 in power transfer initiation S7 determines that the adjustment flag is ON (NO in step 690A). The SECC 51 turns ON the power adjusting function of the supply device 50A paired with the vehicle 1A (step 700A), switches the adjustment flag OFF (step 670A), and then, initiates power transfer (step 680A).

The vehicle 1A according to the second embodiment includes the power reception apparatus 10A that has a power adjusting function. When the vehicle 1A acquires information indicating that the supply device 50A paired with the vehicle 1A has a transferred power adjusting function (step 190A), the vehicle 1A causes the supply device 50A to adjust transferred power (step 220A and step 700A). Adjustment of received power on the power reception apparatus 10A side is stopped (step 450A).

When power supplied to the battery 14 is reduced by transferring constant power from the supply device 50A and adjusting received power to a small amount on the power reception apparatus 10A side, the impedance of the filter 21A is increased. In such a case, a part of received power is converted into heat in the filter 21A.

When transferred power is adjusted on the supply device 50A side as in the control flow according to the second embodiment, generation of such loss can be prevented. Consequently, the charging efficiency of power supplied to the battery 14 with respect to power transferred from the supply device 50A as a reference can be increased.

### Third Embodiment

The first and second embodiments describe the vehicles 1, 1A equipped with the power reception apparatuses 10, 10A that can adjust received power. A vehicle 1B according to a third embodiment is equipped with a power reception apparatus 10B that cannot adjust received power. Therefore, a control flow between the vehicle 1B and a WPT supply site 2B will be described.

The vehicle 1B includes the power reception apparatus 10B. The power reception apparatus 10B includes a filter 21B. The filter 21B is configured to include a passive element and cannot adjust received power received by the secondary device 20.

In the vehicle 1B and the WPT supply site 2B according to the third embodiment, approaching S1 to the WPT supply site, initial compatibility check S2, positioning S3, pairing S4, final compatibility check S5, alignment check S6, and power transfer initiation S7 are executed.

Approaching S1 to the WPT supply site, initial compatibility check S2, positioning S3, pairing S4, and alignment check S6 are executed in the same manner as the first embodiment. In the third embodiment, the vehicle 1B is positioned in accordance with the supply device 50A, and the vehicle 1B is paired with the supply device 50A.

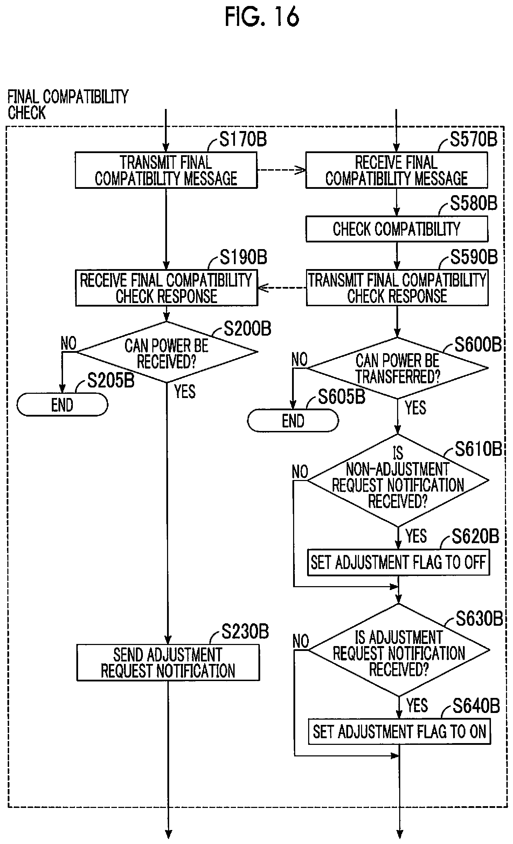

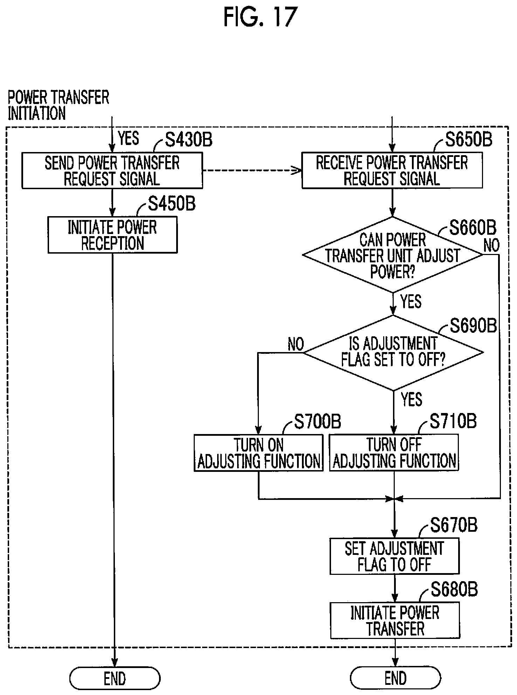

Final compatibility check S5 and power transfer initiation S7 according to the third embodiment will be described by using FIG. 16 and FIG. 17. The control flow of the WPT supply site 2B in final compatibility check S5 is the same as the control flow of the WPT supply site 2 according to the first embodiment. Therefore, the control flow of the vehicle 1B will be mainly described.

FIG. 16 is a flowchart illustrating final compatibility check S5. As illustrated in FIG. 16, when final compatibility check S5 is initiated, the EVCC 31 of the vehicle 1B transmits the final compatibility message through the WLN antenna 33 (step 170B). The SECC 51 of the WPT supply site 2B acquires the final compatibility message of the power reception apparatus 10B through the WLN antenna 52 (step 570B). The final compatibility message includes various types of compatibility information of the power reception apparatus 10B.

When the EVCC 31 receives the final compatibility check response signal from the SECC 51 (step 190B), the EVCC 31 determines whether or not the power reception apparatus 10B can favorably receive power from the supply device 50A, based on the compatibility information of the supply device included in the final compatibility check response signal and the compatibility information of the power reception apparatus 10B (step 200B). The final compatibility check response signal includes the compatibility information of the supply device 50A paired with the vehicle 1B. When the EVCC 31 determines that the power reception apparatus 10B cannot favorably receive power from the supply device 50A (NO in step 200B), the EVCC 31 terminates the process (step 205B). When the EVCC 31 determines that power can be favorably received (YES in step 200B), the EVCC 31 transmits the adjustment request notification through the WLN antenna 33 (step 230B). The adjustment request notification includes the ID of the paired supply device 50A.

In step 200B, the EVCC 31 determines whether or not the supply device paired with the vehicle 1B can adjust transferred power. When the EVCC 31 determines that the supply device paired with the vehicle 1B cannot adjust transferred power, the EVCC 31 determines that the power reception apparatus 10B cannot favorably receive power from the supply device 50A. The power reception apparatus 10B of the vehicle 1B cannot adjust received power. Thus, when the paired supply device cannot adjust transferred power, power for charging the battery 14 cannot be adjusted, and, for example, forced charging cannot be performed. In the third embodiment, the supply device paired with the vehicle 1B is the supply device 50A. The supply device 50A has a transferred power adjusting function.

The SECC 51 performs the same control as final compatibility check S5 of the first embodiment. In the third embodiment, the SECC 51 acquires the final compatibility message (step 570B) and checks compatibility between the vehicle 1B and the supply device 50A (step 580B). The SECC 51 transmits the final compatibility check response signal (step 590B). Then, the power reception apparatus 10B is determined to be capable of favorably receiving power (YES in step 200B). In the third embodiment, the SECC 51 does not receive the non-adjustment request notification from the EVCC 31 (NO in step 610B) and receives the adjustment request signal (YES in step 630B). Thus, the SECC 51 sets the adjustment flag to ON (step 640B).

Next, power transfer initiation S7 according to the third embodiment will be described by using FIG. 17. The control flow of the WPT supply site 2B in power transfer initiation S7 is the same as the control flow of the WPT supply site 2 according to the first embodiment. Therefore, the control flow of the vehicle 1B will be mainly described. FIG. 17 is a flowchart illustrating power transfer initiation S7.

As illustrated in FIG. 17, the EVCC 31 transmits the power transfer request signal (step 430B). The EVCC 31 initiates power reception (step 450B). Specifically, the charging relay 13 is switched ON, and the SMR 15 is switched OFF. In the third embodiment, the power reception apparatus 10B does not have a received power adjusting function. Thus, turning ON a received power adjusting function does not occur.

The SECC 51 receives the power transfer request signal (step 650B). The power transfer request signal includes the ID of the supply device. In the third embodiment, the EVCC 31 transmits the power transfer request signal including the ID of the supply device 50A.

The SECC 51 determines whether or not the supply device 50A specified by the ID included in the power transfer request signal can adjust transferred power (step 660B). When the SECC 51 determines that the supply device specified by the ID included in the power transfer request signal cannot adjust transferred power (NO in step 660B), the SECC 51 sets the adjustment flag to OFF (step 670B) and initiates power transfer (step 680B).

When the SECC 51 determines that the supply device specified by the ID included in the power transfer request signal has a transferred power adjusting function (YES in step 660B), the SECC 51 determines whether or not the adjustment flag is OFF (step 690B).

When the adjustment flag is OFF, the SECC 51 turns OFF the adjusting function of the supply device (step 710B) and initiates power transfer (step 680B). When the adjustment flag is ON, the SECC 51 turns OFF the transferred power adjusting function of the supply device (step 710B) and initiates power transfer (step 680B).

In the third embodiment, the supply device 50A is paired with the vehicle 1B, and the supply device 50A can adjust transferred power. Thus, the supply device 50A turns ON the transferred power adjusting function (step 700B) and initiates power transfer (step 680B).

The vehicle 1B according to the third embodiment is equipped with the power reception apparatus 10B that cannot adjust received power. When the EVCC 31 acquires information indicating that the supply device paired with the vehicle 1B can adjust transferred power (step 190B), the EVCC 31 transmits a signal that causes the supply device to adjust and transfer power (step 230B).

Accordingly, even when the vehicle 1B that cannot adjust received power is stopped in the WPT supply site 2B, received power received by the power reception apparatus 10B can be adjusted by using the transferred power adjusting function of the supply device paired with the vehicle 1B.

When the supply device with which the vehicle 1B is positioned and paired cannot adjust transferred power, the EVCC 31 and the SECC 51 are placed into a standby state in final compatibility check S5 (step 205B and step 605B).

### Fourth Embodiment

In the first to third embodiments, the vehicle determines whether the power, reception apparatus adjusts power or the supply device adjusts power. In a fourth embodiment, the SECC of the WPT supply site determines which of the power reception apparatus and the supply device adjusts power. In the fourth embodiment, when the paired supply device has a power adjusting function, power is adjusted on the supply device side, and the vehicle is requested to receive power without functioning the power adjusting function of the power reception apparatus.

In a vehicle 1C and the WPT supply site 2C according to the fourth embodiment, approaching S1 to the WPT supply site, initial compatibility check S2, positioning S3, pairing S4, final compatibility check S5, alignment check S6, and power transfer initiation S7 are performed.

Approaching S1 to the WPT supply site, initial compatibility check S2, positioning S3, pairing S4, and alignment check S6 are the same as in the first to third embodiments.

The WPT supply site 2C is configured in the same manner as the WPT supply sites 2, 2A, 2B according to the first to third embodiments.

The vehicle 1C is equipped with a power reception apparatus 10C. The power reception apparatus 10C includes a filter 21C that can adjust received power.

In the fourth embodiment, the vehicle 1C is positioned and paired with the supply device 50A.

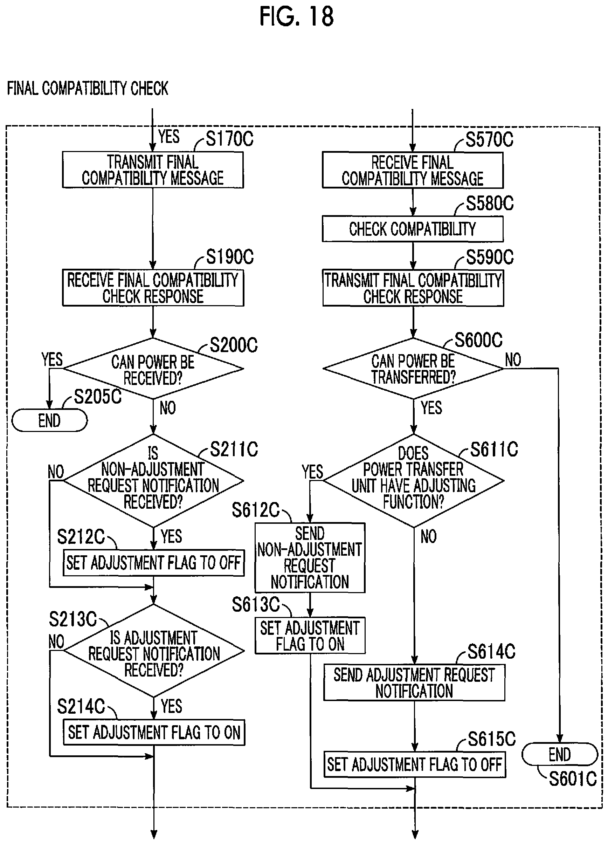

FIG. 18 is a flowchart illustrating final compatibility check S5 of the vehicle 1C and the WPT supply site 2C according to the fourth embodiment.

As illustrated in FIG. 18, when final compatibility check S5 is initiated, the EVCC 31 of the vehicle 1C transmits the final compatibility message (step 170C). The final compatibility message includes the ID specifying the supply device paired with the vehicle 1C and various types of compatibility information of the power reception apparatus 10C.

When the SECC 51 receives the final compatibility message (step 570C), the SECC 51 checks compatibility between the supply device specified by the ID included in the final compatibility message and the power reception apparatus 10C (step 580C).

The SECC 51 transmits the final compatibility check response signal (step 590C). The final compatibility check response signal includes the success code related to compatibility between the supply device paired with the vehicle 1C and the power reception apparatus 10C and the compatibility information (minimum power and the like) of the supply device paired with the vehicle 1C.

In the fourth embodiment, the supply device paired with the vehicle 1C is the supply device 50A. The final compatibility check response signal includes the success code related to compatibility between the power reception apparatus 10C and the supply device 50A and various kinds of compatibility information of the supply device 50A.

When the SECC 51 transmits the final compatibility check response signal, the SECC 51 determines whether or not the supply device paired with the vehicle 1C can favorably transfer power to the power reception apparatus 10C (step 600C).

In the fourth embodiment, when both of the supply device paired with the vehicle 1C and the power reception apparatus 10C are not determined to have a power adjusting function, the SECC 51 determines that the paired supply device cannot favorably transfer power to the power reception apparatus 10C.

When both of the supply device and the power reception apparatus 10C do not have a power adjusting function, charging power supplied to the battery 14 cannot be adjusted, and the battery 14 may be damaged.

When the SECC 51 determines that the supply device paired with the vehicle 1C cannot favorably transfer power to the power reception apparatus 10C (NO in step 600C), the SECC 51 is placed into a standby state, and the process is terminated (step 601C).

When the SECC 51 determines that the supply device paired with the vehicle 1C can favorably transfer power to the power reception apparatus 10C (YES in step 600C), the SECC 51 determines whether or not the supply device paired with the vehicle 1C can adjust transferred power (step 611C).

When the SECC 51 determines that the supply device paired with the vehicle 1C can adjust transferred power (YES in step 611C), the SECC 51 transmits the non-adjustment request notification through the WLN antenna 52 (step 612C) and sets the adjustment flag of the supply device paired with the vehicle 1C to ON (step 613C).

In the fourth embodiment, the vehicle 1C is paired with the supply device 50A, and the supply device 50A has a transferred power adjusting function. In such a case, the adjustment flag is set to ON in order to adjust transferred power on the supply device 50A side. The SECC 51 transmits the non-adjustment request notification to the EVCC 31 in order to prevent power adjustment in both of the power reception apparatus 10C and the supply device 50A.

When the SECC 51 determines that the supply device paired with the vehicle 1C cannot adjust transferred power (NO in step 611C), the SECC 51 transmits the adjustment request notification through the WLN antenna 52 (step 614C) and sets the adjustment flag to OFF (step 615C).

When the supply device paired with the vehicle 1C is the supply device 50C, the supply device 50C does not have a transferred power adjusting function. Therefore, the SECC 51 transmits the adjustment request notification that requests adjustment of received power on the power reception apparatus 10C side. Since the supply device 50C cannot adjust transferred power, the power reception apparatus 10C is to adjust received power.

After the EVCC 31 transmits the final compatibility message, the EVCC 31 receives the final compatibility check response signal (step 190C). Then, the EVCC 31 determines whether or not the power reception apparatus 10C can favorably receive power from the supply device 50A, based on the compatibility information of the supply device 50A included in the final compatibility check response signal and the compatibility information of the power reception apparatus 10C (step 200C). When the EVCC 31 determines that the power reception apparatus 10C cannot favorably receive power (NO in step 200C), the EVCC 31 is placed into a standby state (step 205C).

When the EVCC 31 determines that the power reception apparatus 10C can favorably receive power (YES in step 200C), the EVCC 31 determines whether or not the non-adjustment request notification is received (step 211). When the EVCC 31 determines that the non-adjustment request notification is received, the EVCC 31 maintains the OFF state of the adjustment flag (step 212C). In the fourth embodiment, the SECC 51 transmits the non-adjustment request notification (step 612C), and the EVCC 31 receives the non-adjustment request notification.

The EVCC 31 determines whether or not the adjustment request signal is received (step 213C). When the EVCC 31 determines that the adjustment request signal is received (YES in step 213C), the EVCC 31 sets the adjustment flag to ON (step 214C). When the EVCC 31 determines that the adjustment request signal is not received, the EVCC 31 maintains the OFF state of the adjustment flag.

Accordingly, final compatibility check S5 according to the fourth embodiment is terminated.

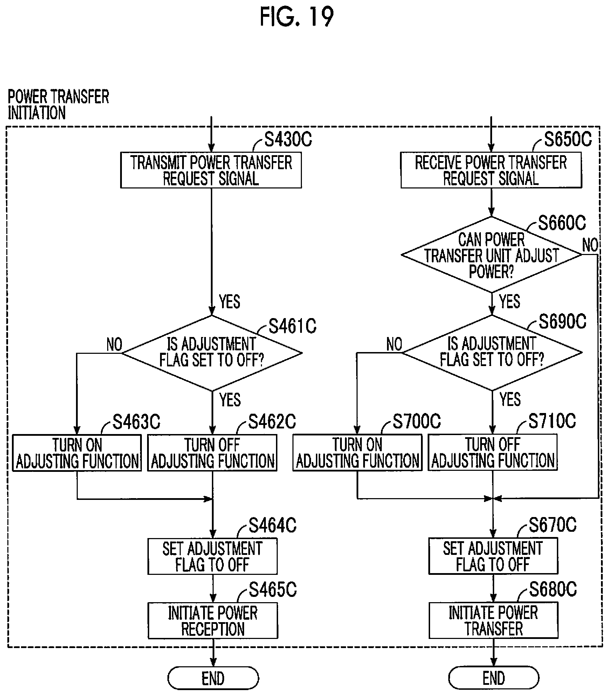

Next, power transfer initiation S7 according to the fourth embodiment will be described by using FIG. 19. FIG. 19 is a flowchart illustrating power transfer initiation S7 of the vehicle 1C and the WPT supply site 2C according to the fourth embodiment. As illustrated in FIG. 19, the EVCC 31 of the vehicle 1C transmits the power transfer request signal (step 430C). The power transfer request signal includes the ID specifying the supply device paired with the vehicle 1C. In the fourth embodiment, the vehicle 1C is paired with the supply device 50A, and the power transfer request signal includes the ID specifying the supply device 50A.

When the SECC 51 receives the power transfer request signal (step 650C), the SECC 51 determines whether or not the supply device specified by the ID included in the power transfer request signal has a transferred power adjusting function (step 660C).

When the SECC 51 determines that the supply device specified by the ID included in the power transfer request signal has a transferred power adjusting function (YES in step 660C), the SECC 51 determines whether or not the adjustment flag for the supply device is OFF (step 690C).

When the SECC 51 determines that the adjustment flag is OFF (YES in step 690C), the SECC 51 turns OFF the transferred power adjusting function of the supply device specified in the power transfer request signal (step 710C), maintains the OFF state of the adjustment flag (step 670C), and initiates power transfer (step 680C). When the SECC 51 determines that the adjustment flag is ON (NO in step 690C), the SECC 51 turns ON the transferred power adjusting function of the supply device (step 700C), switches the adjustment flag OFF (step 670C), and initiates power transfer (step 680C).

In the fourth embodiment, the vehicle 1C is paired with the supply device 50A, and the adjustment flag for the supply device 50A is ON in final compatibility check S5 (step 613C). Thus, power transfer is initiated with the transferred power adjusting function of the supply device 50A turned ON.

Next, after the EVCC 31 transmits the power transfer request signal, the EVCC 31 determines whether or not the adjustment flag is OFF (step 461C).

When the EVCC 31 determines that the adjustment flag is OFF (YES in step 461C), the EVCC 31 turns OFF the received power adjusting function of the power reception apparatus 10C (step 462C), maintains the OFF state of the adjustment flag (step 464C), and initiates power reception (step 465C).

In the fourth embodiment, the vehicle 1C is paired with the supply device 50A, and the SECC 51 transmits the non-adjustment request notification to the EVCC 31 (step 612C). Thus, the EVCC 31 sets the adjustment flag to OFF (step 212C). Consequently, the EVCC 31 initiates power reception with the received power adjusting function of the power reception apparatus 10C turned OFF.

When the EVCC 31 determines that the adjustment flag is ON (NO in step 461C), the EVCC 31 turns ON the received power adjusting function of the power reception apparatus 10C (step 463C), switches the adjustment flag OFF (step 464C), and initiates power reception (step 465C).

For example, when the vehicle 1C is paired with the supply device 50C, the SECC 51 transmits the adjustment request notification to the EVCC 31 in final compatibility check S5 (step 614C) since the supply device 50C does not have a transferred power adjusting function. Thus, the EVCC 31 sets the adjustment flag to ON (step 214C). Consequently, in power transfer initiation S7, the EVCC 31 determines that the adjustment flag is ON (NO in step 461C), and receives power with the power adjusting function of the power reception apparatus 10C turned ON. Accordingly, power transfer initiation S7 according to the fourth embodiment is terminated.

In the fourth embodiment, the SECC 51 acquires the compatibility information (power adjusting function presence information) of the power reception apparatus 10C. When the SECC 51, based on the compatibility information (power adjusting function presence information) of the supply device paired with the vehicle 1C and the compatibility information of the power reception apparatus 10C, determines that both of the supply device paired with the vehicle 1C and the power reception apparatus 10C have a power adjusting function, the SECC 51 causes the supply device to adjust transferred power and transmits a signal that requests stopping the power adjusting function of the power reception apparatus.

When the SECC 51 determines that the supply device paired with the vehicle 1C does not have a transferred power adjusting function and that the power reception apparatus 10C has a received power adjusting function, the SECC 51 transmits a signal that requests the power reception apparatus 10C to adjust received power.

### Fifth Embodiment

In the fourth embodiment, when the supply device paired with the vehicle has a transferred power adjusting function, the SECC performs control to adjust transferred power on the supply device side. In a fifth embodiment, when the power reception apparatus has a received power adjusting function, the SECC requests the EVCC to adjust received power by the power reception apparatus even when the supply device paired with the vehicle has a transferred power adjusting function.

A vehicle 1D includes a power reception apparatus 10D. The power reception apparatus 10D includes a filter 21D. The filter 21D can adjust received power in the same manner as the first embodiment and the like. A WPT supply site 2D includes the supply devices 50A to 50D in the same manner as the first embodiment and the like.

Approaching S1 to the WPT supply site, initial compatibility check S2, positioning S3, pairing S4, and alignment check S6 in the fifth embodiment are the same as in the first embodiment and the like.

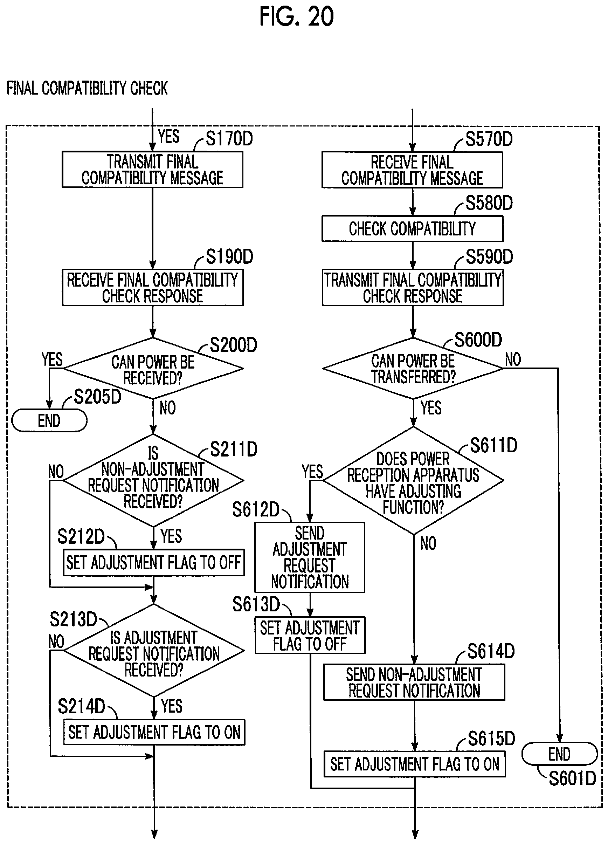

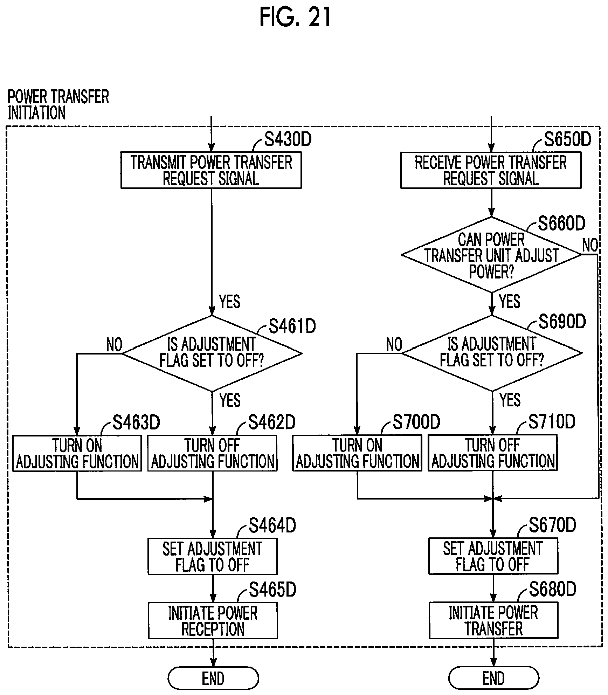

Final compatibility check S5 and power transfer initiation S7 will be described by using FIG. 20 and FIG. 21. In the fifth embodiment, the vehicle 1D is paired with the supply device 50A.

FIG. 20 is a flowchart illustrating final compatibility check S5 according to the fifth embodiment. Steps 170D to 214D of the EVCC 31 of the vehicle 1D in FIG. 20 are the same as steps 170C to 214C of the EVCC 31 of the vehicle 1C according to the fourth embodiment.

Steps 570D to 611D of the SECC 51 of the WPT supply site 2D are the same as steps 570C to 611C of the SECC 51 of the WPT supply site 2C according to the fourth embodiment. Therefore, steps 611D to 615D will be mainly described.

When the SECC 51 determines that the paired supply device can favorably transfer power to the power reception apparatus 10D (YES in step 600D), the SECC 51 determines whether or not the power reception apparatus 10D can adjust received power (step 611D). When the SECC 51 determines that the supply device paired with the vehicle 1D cannot favorably transfer power to the power reception apparatus 10D (NO in step 600D), the SECC 51 is placed into a standby state, and the process is terminated (step 601D).

The SECC 51 is placed into a standby state when, for example, both of the compatibility information of the power reception apparatus 10D included in the final compatibility message and the supply device paired with the vehicle 1D do not have a power adjusting function. When all of the supply devices 50A to 50D do not have a power adjusting function and the power reception apparatus does not have a received power adjusting function, the EVCC 31 and the SECC 51 are placed into a standby state in initial compatibility check S2 illustrated in FIG. 9 (step 180 and step 580).

When the SECC 51 determines that the power reception apparatus 10D can adjust received power (YES in step 611D), the SECC 51 transmits the adjustment request notification through the WLN antenna 52 (step 612D) and maintains the OFF state of the adjustment flag (step 613D). Specifically, the SECC 51 maintains the OFF state of the adjustment flag of the supply device specified by the ID included in the final compatibility message.

In the fifth embodiment, when the power reception apparatus can adjust received power, power adjustment is requested to be performed on the power reception apparatus side regardless of whether or not the supply device paired with the vehicle has a transferred power adjusting function.

The vehicle ECU 37 of the vehicle 1D has information related to the target value of received power. Thus, adjusting received power on the power reception apparatus 10D side enables timely adjustment of received power. That is, when transferred power is adjusted on the supply device side, the vehicle 1D is to transmit the information related to the target value of received power to the WPT supply site 2D from the vehicle 1D. Time loss occurs from reception of the information by the WPT supply site 2D to actual adjustment of transferred power. When received power is adjusted on the power reception apparatus 10D side, occurrence of such time loss can be prevented.

In the fifth embodiment, the power reception apparatus 10D has a received power adjusting function. Thus, the SECC 51 transmits the adjustment request signal and sets the adjustment flag to OFF.

When the SECC 51 determines that the power reception apparatus cannot adjust received power (NO in step 611D), the SECC 51 transmits the non-adjustment request notification through the WLN antenna 52 (step 614D) and sets the adjustment flag to ON (step 615D).

Received power may not be adjusted depending on the power reception apparatus with which the vehicle is equipped. In such a case, transferred power is to be adjusted on the supply device side.

After the EVCC 31 receives the final compatibility check response, the EVCC 31 determines whether or not the power reception apparatus 10D can favorably receive power from the paired supply device (step 200D). When the EVCC 31 determines that the power reception apparatus 10D cannot favorably receive power (NO in step 200D), the EVCC 31 is placed into a standby state, and the process is terminated (step 205D).

When the EVCC 31 determines that the power reception apparatus 10D can favorably receive power (YES in step 200D), the EVCC 31 determines whether or not the non-adjustment request notification is received (step 211D). When the EVCC 31 receives the non-adjustment request notification, the EVCC 31 maintains the OFF state of the adjustment flag (step 212D).

The EVCC 31 determines whether or not the adjustment request signal is received (step 213D). When the EVCC 31 determines that the adjustment request signal is received, the EVCC 31 sets the adjustment flag to ON (step 214D). Accordingly, final compatibility check S5 of the fifth embodiment is terminated.

FIG. 21 is a flowchart illustrating power transfer initiation S7 of the fifth embodiment. Power transfer initiation S7 according to the fifth embodiment is the same as power transfer initiation S7 according to the fourth embodiment. Therefore, power transfer initiation S7 of the fifth embodiment will be briefly described.

In the fifth embodiment, the vehicle 1D is paired with the supply device 50A, and the secondary device 20D of the vehicle 1D has a received power adjusting function. Thus, in final compatibility check S5, the SECC 51 transmits the adjustment request notification to the EVCC 31 (step 612D) and sets the adjustment flag to OFF (step 613D). The EVCC 31 sets the adjustment flag to ON (step 214D). Thus, in power transfer initiation S7, the EVCC 31 turns ON the received power adjusting function of the power reception apparatus 10D (step 463D), and the SECC 51 turns OFF the transferred power adjusting function of the supply device 50D (step 710D).

When the vehicle 1D is paired with the supply device 50C, the SECC 51 transmits the adjustment request notification to the EVCC 31 (step 612D) and maintains the OFF state of the adjustment flag (step 613D) in final compatibility check S5. Consequently, in such a case, the EVCC 31 turns ON the received power adjusting function of the power reception apparatus 10D (step 463D) and initiates power reception (step 465D) in power transfer initiation S7.

When a vehicle equipped with a power reception apparatus not having a received power adjusting function is paired with the supply device 50C, the EVCC 31 and the SECC 51 in final compatibility check S5 determine that power transfer and power reception cannot be favorably performed (NO in step 200D and step 600D), and the EVCC 31 and the SECC 51 are placed into a standby state.

### Sixth Embodiment

In the first to fifth embodiments, in final compatibility check S5, the EVCC 31 transmits the power adjusting function presence information of the power reception apparatuses 10 to 10D to the SECC 51, and the SECC 51 transmits the power adjusting function presence information of the paired supply device to the EVCC 31.

In a sixth embodiment, information related to the presence of a power adjusting function is not transmitted and received between the EVCC 31 and the SECC 51 in final compatibility check S5. In the sixth embodiment, a determination as to whether or not the supply device has a transferred power adjusting function is performed by detecting variations in received power received by a power reception apparatus 10E after power transfer is initiated.

A vehicle 1E includes the power reception apparatus 10E. The power reception apparatus 10E includes a filter 21E that can adjust received power.

A WPT supply site 2E includes the supply device 50A to the supply device 50D in the same manner as the first embodiment.

In the sixth embodiment, the vehicle 1E is paired with the supply device 50A.

Approaching S1 to the WPT supply site, initial compatibility check S2, positioning S3, pairing S4, and alignment check S6 according to the sixth embodiment are the same as in the first embodiment and the like.

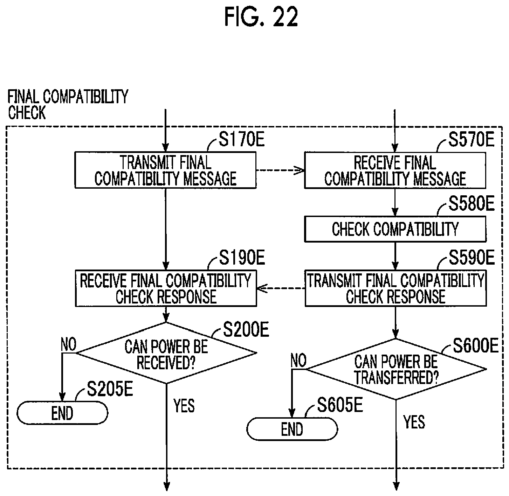

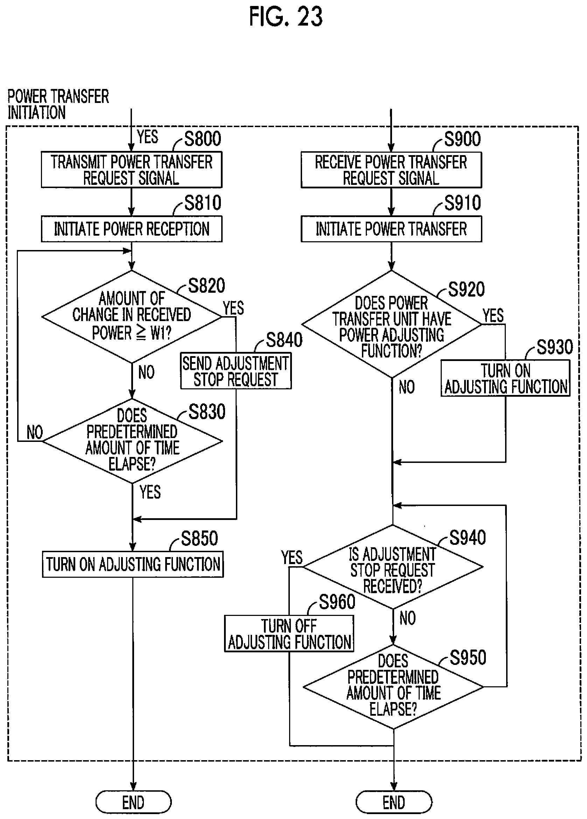

Final compatibility check S5 and power transfer initiation S7 of the sixth embodiment will be described by using FIG. 22 and FIG. 23.

FIG. 22 is a flowchart illustrating final compatibility check S5 in the sixth embodiment. As illustrated in FIG. 22, the EVCC 31 transmits the final compatibility message (step 170E).

The final compatibility message includes the compatibility information of the power reception apparatus 10E and the ID specifying the supply device 50A paired with the vehicle 1E.

The compatibility information of the power reception apparatus 10E includes at least one of the WPT power classes, the maximum receivable power, the air gap class, the operating frequency, the WPT type, and the like. The compatibility information of the power reception apparatus 10E does not include the power adjusting function presence information of the power reception apparatus 10E.

When the SECC 51 receives the final compatibility message, the SECC 51 specifies the supply device 50A as the supply device paired with the vehicle 1E based on the ID included in the final compatibility message.

The SECC 51 checks compatibility between the supply device 50A and the power reception apparatus 10E based on the compatibility information of the supply device 50A and the compatibility information of the power reception apparatus 10E (step 580E).

The SECC 51 transmits the final compatibility check response signal to the EVCC 31 (step 590E). The final compatibility check response signal includes at least one of the success code, the maximum power, the minimum power, and the WPT type. The final compatibility check response signal does not include the power adjusting function presence information of the supply device 50A paired with the vehicle 1E.

The EVCC 31 determines whether or not the power reception apparatus 10E can favorably receive power from the supply device 50A, based on the acquired compatibility information of the supply device 50A (step 200E). When the EVCC 31 determines that the power reception apparatus 10E cannot favorably receive power, the EVCC 31 is placed into a standby state, and the process is terminated (step 205E).

The SECC 51 determines whether or not the supply device 50A can favorably transfer power, based on the acquired compatibility information of the power reception apparatus 10E (step 600E). When the SECC 51 determines that the supply device 50A cannot favorably transfer power, the SECC 51 is placed into a standby state, and the process is terminated (step 605E).

When the EVCC 31 and the SECC 51 determine that power transfer and power reception can be favorably performed between the supply device 50A and the power reception apparatus 10E (YES in step 200E and step 600E), final compatibility check S5 is normally terminated.

FIG. 23 is a flowchart illustrating power transfer initiation S7 of the sixth embodiment. As illustrated in FIG. 23, the EVCC 31 transmits the power transfer request signal (step 800). The power transfer request signal includes the ID specifying the supply device paired with the vehicle 1E.

When the SECC 51 receives the power transfer request signal, the SECC 51 specifies the supply device 50A from the ID included in the power transfer request signal. The SECC 51 initiates power transfer from the supply device 50A (step 910).

The SECC 51 determines whether or not the supply device (supply device 50A) specified by the ID included in the power transfer request signal has a transferred power adjusting function (step 920).

When the SECC 51 determines that the supply device specified by the ID included in the power transfer request signal has a transferred power adjusting function (YES in step 920), the SECC 51 turns ON the transferred power adjusting function of the supply device (step 930).

When the SECC 51 determines that the supply device does not have a transferred power adjusting function (NO in step 920), the SECC 51 continues power transfer. In such a case, the supply device transfers constant power.

In the sixth embodiment, the supply device 50A paired with the vehicle 1E has a transferred power adjusting function. Thus, power transfer continues with the transferred power adjusting function turned ON. At this point, the supply device 50A gradually increases transferred power, for example, at the time of start-up. When the amount of transferred power reaches the target amount of transferred power, a constant amount of transferred power is maintained.

After the EVCC 31 transmits the power transfer request signal, the EVCC 31 initiates power reception (step 810). The EVCC 31 measures the amount of received power. When the EVCC 31 determines that the difference between the initial value of received power and the measured amount of received power is greater than or equal to a predetermined value (W1) (YES in step 820), the EVCC 31 transmits an adjustment stop request to the SECC 51 (step 840).

When the EVCC 31 determines that the difference between the initial value of received power and the measured amount of received power is less than the predetermined value (NO in step 820), the EVCC 31 determines whether a predetermined amount of time elapses from initiation of measurement of the amount of received power (step 830).

When the EVCC 31 determines that the predetermined amount of time does not elapse (NO in step 830), the EVCC 31 repeats the determination as to whether or not the amount of change in received power is greater than or equal to the predetermined value (step 820). When the state where the change in received power is less than the predetermined value continues for the predetermined amount of time, the EVCC 31 turns ON the received power adjusting function of the power reception apparatus 10E (step 850).

When the EVCC 31 determines that the amount of change in received power becomes greater than or equal to the predetermined value within the predetermined amount of time (YES in step 820), the EVCC 31 transmits the adjustment stop request signal to the SECC 51 (step 840). Then, the EVCC 31 turns ON the received power adjusting function of the power reception apparatus 10E (step 850). The adjustment stop request signal includes the ID specifying the supply device.

When the amount of change in received power becomes greater than or equal to the predetermined value within the predetermined amount of time from initiation of power reception with the received power adjusting function of the power reception apparatus 10E turned OFF, transferred power can be assumed to be changed by the transferred power adjusting function of the supply device 50A. Therefore, the transferred power adjusting function of the supply device 50A is stopped, and the adjusting function of the power reception apparatus 10E is started.

When the amount of change in received power within the predetermined amount of time from initiation of power reception is less than the predetermined value with the received power adjusting function of the power reception apparatus 10E turned OFF, the supply device 50A can be assumed not to have a transferred power adjusting function. Therefore, power reception is caused to continue by starting the received power adjusting function of the power reception apparatus 10E.

The SECC 51 determines whether or not the adjustment stop request signal is received within a predetermined amount of time after step 920 (step 940 and step 950). When the SECC 51 determines that the adjustment stop request is received within the predetermined amount of time (YES in step 940), the SECC 51 turns OFF the power adjusting function of the supply device specified by the ID included in the adjustment stop request signal (step 960).

In the sixth embodiment, the supply device 50A has a transferred power adjusting function and gradually increases transferred power from initiation of power transfer. Thus, the difference between the amount of received power received by the power reception apparatus 10E and the initial amount of received power exceeds the predetermined value within the predetermined amount of time (YES in step 820).

Consequently, the EVCC 31 transmits the adjustment stop request signal (step 840). The SECC 51 turns OFF the transferred power adjusting function of the supply device 50A (step 960), and the EVCC 31 turns ON the received power adjusting function of the power reception apparatus 10E (step 850).

In the sixth embodiment, the EVCC 31 can acquire information indicating whether or not the supply device has a transferred power adjusting function, based on the change in received power within the predetermined amount of time after initiation of power reception.

In the sixth embodiment, when information indicating that the supply device 50A has a transferred power adjusting function is acquired, the transferred power adjusting function of the supply device 50A is turned OFF, and the received power adjusting function of the power reception apparatus 10E is started. When information indicating that the supply device 50A has a transferred power adjusting function is acquired, the ON state of the transferred power adjusting function of the supply device 50A may be maintained, and the OFF state of the received power adjusting function of the power reception apparatus 10E may be maintained.

The embodiments disclosed herein are for illustrative purposes from every aspect and are not to be considered for limitation purposes. The scope of the disclosure is described by the claims and not by the description and includes meanings equivalent to the claims and all modifications carried out within the scope of the claims.

## Claims

1. A vehicle comprising:
a power reception apparatus (10) including a secondary device (20) configured to wirelessly receive power from a primary device (60) of an external power supply device, the external power supply device configured to transfer power and including the primary device (60); and
an electric vehicle communication controller (31) configured to acquire information indicating whether or not the external power supply device has a function of adjusting power transferred from the primary device (60);
**characterized in that** the power reception apparatus (10) does not have the capability of adjusting the received power; and
the power reception apparatus (10) is configured to be placed into a standby state of not receiving power from the external power supply device when the electric vehicle communication controller (31) has acquired information that the external power supply device does not have a transferred power adjusting function.

2. The vehicle according to claim 1, wherein the electric vehicle communication controller (31) is configured to transmit a signal requesting the supply device to transfer power by adjusting transferred power, when the electric vehicle communication controller (31) acquires information indicating that the supply device has the function of adjusting power transferred from the primary device (60).

3. The vehicle according to claim 1, further comprising an adjuster configured to adjust received power,
wherein the electric vehicle communication controller (31) transmits a signal requesting the supply device to transfer power without adjusting transferred power, when the electric vehicle communication controller (31) acquires information indicating that the supply device has the function of adjusting power transferred from the primary device (60).

4. The vehicle according to claim 1, further comprising an adjuster configured to adjust received power,
wherein in a state where the adjuster is not driven after initiation of power transfer from the supply device, the electric vehicle communication controller (31) acquires information indicating that the supply device has the function of adjusting power transferred from the primary device (60), by detecting a change in received power, and acquires information indicating that the supply device does not have the transferred power adjusting function, by detecting non-changing received power.

## Patentansprüche

1. Fahrzeug, umfassend:
eine Energieaufnahmeeinrichtung (10), die eine sekundäre Vorrichtung (20) beinhaltet, die dazu ausgestaltet ist, drahtlos Energie von einer primären Vorrichtung (60) einer externen Energieversorgungsvorrichtung aufzunehmen, wobei die externe Energieversorgungsvorrichtung dazu ausgestaltet ist, Energie zu übertragen, und die primäre Vorrichtung (60) beinhaltet, und
ein elektrisches Fahrzeug-Kommunikationssteuergerät (31), das dazu ausgestaltet ist, Informationen zu erfassen, die angeben, ob die externe Energieversorgungsvorrichtung eine Funktion zur Einstellung der Energie, die von der primären Vorrichtung (60) übertragen wird, aufweist oder nicht,
**dadurch gekennzeichnet, dass** die Energieaufnahmeeinrichtung (10) nicht die Fähigkeit zur Einstellung der aufgenommenen Energie aufweist, und
die Energieaufnahmeeinrichtung (10) dazu ausgestaltet ist, in einen Standby-Zustand versetzt zu werden, in welchem sie keine Energie von der externen Energieversorgungsvorrichtung aufnimmt, wenn das elektrische Fahrzeug-Kommunikationssteuergerät (31) eine Information erfasst hat, dass die externe Energieversorgungsvorrichtung keine Funktion zur Einstellung der übertragenen Energie aufweist.

2. Fahrzeug nach Anspruch 1, wobei das elektrische Fahrzeug-Kommunikationssteuergerät (31) dazu ausgestaltet ist, ein Signal zu senden, das die Versorgungsvorrichtung auffordert, Energie zu übertragen, indem es die übertragene Energie einstellt, wenn das elektrische Fahrzeug-Kommunikationssteuergerät (31) die Information erfasst, dass die Versorgungsvorrichtung die Funktion zur Einstellung der Energie aufweist, die von der primären Vorrichtung (60) übertragen wird.

3. Fahrzeug nach Anspruch 1, ferner umfassend einen Einsteller, der dazu ausgestaltet ist, die aufgenommene Energie einzustellen,
wobei das elektrische Fahrzeug-Kommunikationssteuergerät (31) ein Signal sendet, das die Versorgungsvorrichtung auffordert, Energie zu übertragen, ohne dass es die übertragene Energie einstellt, wenn das elektrische Fahrzeug-Kommunikationssteuergerät (31) die Information erfasst, die angibt, dass die Versorgungsvorrichtung die Funktion zur Einstellung der Energie aufweist, die von der primären Vorrichtung (60) übertragen wird.

4. Fahrzeug nach Anspruch 1, ferner umfassend einen Einsteller, der dazu ausgestaltet ist, die aufgenommene Energie einzustellen,
wobei in einem Zustand, in welchem der Einsteller nach Beginn einer Energieübertragung von der Versorgungsvorrichtung nicht angesteuert wird, das elektrische Fahrzeug-Kommunikationssteuergerät (31) eine Information erfasst, die angibt, dass die Versorgungsvorrichtung die Funktion zur Einstellung der Energie aufweist, die von der primären Vorrichtung (60) übertragen wird, indem es eine Veränderung in der aufgenommenen Energie erkennt, und eine Information erfasst, die angibt, dass die Versorgungsvorrichtung nicht die Funktion zur Einstellung der übertragenen Energie aufweist, indem es keine Veränderung der aufgenommenen Energie erkennt.

## Revendications

1. Véhicule comprenant :
un appareil de réception d'énergie (10) comprenant un dispositif secondaire (20) configuré pour recevoir sans fil de l'énergie provenant d'un dispositif principal (60) d'un dispositif d'alimentation externe, le dispositif d'alimentation externe étant configuré pour transférer de l'énergie et comprenant le dispositif principal (60) ; et
un circuit de commande de communication de véhicule électrique (31) configuré pour acquérir de l'information indiquant si le dispositif d'alimentation externe a ou non une fonction d'ajustement de l'énergie transférée à partir du dispositif principal (60) ;
**caractérisé en ce que** l'appareil de réception d'énergie (10) n'a pas la capacité d'ajuster l'énergie reçue ; et
l'appareil de réception d'énergie (10) est configuré pour être placé dans un état d'attente de ne pas recevoir de l'énergie à partir du dispositif d'alimentation externe quand le circuit de commande de communication de véhicule électrique (31) a acquis l'information que le dispositif d'alimentation externe n'a pas une fonction d'ajustement de l'énergie transférée.

2. Véhicule selon la revendication 1, dans lequel le circuit de commande de communication de véhicule électrique (31) est configuré pour transmettre un signal demandant au dispositif d'alimentation de transférer de l'énergie en ajustant de l'énergie transférée, quand le circuit de commande de communication de véhicule électrique (31) acquiert de l'information indiquant que le dispositif d'alimentation a la fonction d'ajustement de l'énergie transférée à partir du dispositif principal (60).

3. Véhicule selon la revendication 1, comprenant en outre un dispositif d'ajustement configuré pour ajuster l'énergie reçue,
dans lequel le circuit de commande de communication de véhicule électrique (31) transmet un signal demandant au dispositif d'alimentation de transférer de l'énergie sans ajuster l'énergie transférée, quand le circuit de commande de communication de véhicule électrique (31) acquiert de l'information indiquant que le dispositif d'alimentation a la fonction d'ajustement de l'énergie transférée à partir du dispositif principal (60).

4. Véhicule selon la revendication 1, comprenant en outre un dispositif d'ajustement configuré pour ajuster l'énergie reçue,
dans lequel, dans un état où le dispositif d'ajustement n'est pas piloté après initiation du transfert d'énergie à partir du dispositif d'alimentation, le circuit de commande de communication de véhicule électrique (31) acquiert de l'information indiquant que le dispositif d'alimentation a la fonction d'ajustement de l'énergie transférée à partir du dispositif principal (60), en détectant un changement dans l'énergie reçue, et acquiert de l'information indiquant que le dispositif d'alimentation n'a pas la fonction d'ajustement d'énergie transférée, en détectant l'énergie reçue qui ne change pas.
